# EUROPEAN PATENT SPECIFICATION

(11) **EP 4 060 471 B1**
(45) Date of publication and mention of the grant of the patent: **15.10.2025**
(21) Application number: 20888127.6
(22) Date of filing: 13.11.2020
(51) Int. Cl.: G06F 1/16, G06F 1/3234, G06F 3/039, G06F 3/04847, G06F 3/04883, G06F 3/04886, H04M 1/02

(54) **ELECTRONIC DEVICE COMPRISING TOUCH SENSOR**
ELEKTRONISCHE VORRICHTUNG MIT BERÜHRUNGSSENSOR
DISPOSITIF ÉLECTRONIQUE COMPRENANT UN CAPTEUR TACTILE

(30) Priority: 14.11.2019 KR 20190146189
(43) Date of publication of application: 21.09.2022
(73) Proprietor: Samsung Electronics Co., Ltd., Suwon-si, Gyeonggi-do 16677 (KR)
(72) Inventor: KOO, Jaok, Suwon-si, Gyeonggi-do 16677 (KR); WON, Jonghoon, Suwon-si, Gyeonggi-do 16677 (KR); YUN, Yongsang, Suwon-si, Gyeonggi-do 16677 (KR); LEE, Dasom, Suwon-si, Gyeonggi-do 16677 (KR); LEE, Seo, Suwon-si, Gyeonggi-do 16677 (KR); JI, Yunjeong, Suwon-si, Gyeonggi-do 16677 (KR); HAN, Hoon, Suwon-si, Gyeonggi-do 16677 (KR); LEE, Jangwoo, Suwon-si, Gyeonggi-do 16677 (KR)
(74) Representative: HGF
(86) International application number: PCT/KR2020/015977
(87) International publication number: WO 2021/096280

(56) References cited:
- JP-A- 2010 213 169
- KR-A- 20070 001 440
- KR-A- 20150 100 081
- KR-A- 20160 080 841
- US-A1- 2015 015 511
- US-A1- 2016 026 381
- US-A1- 2017 293 383
- US-A1- 2018 198 896
- US-A1- 2018 242 446
- US-A1- 2019 278 394

## Description

### [Technical Field]

Various embodiments relate to an electronic device including a touch sensor.

### [Background Art]

A foldable electronic device may include multiple housing structures for performing a folding operation and a connection part rotatably coupled to the multiple housing structures. In addition, the foldable electronic device may include a flexible display which can be bent according to the folding angle.

The angle-adjustable foldable electronic device may enable the user of the electronic device to use the electronic device in various environments.

For example, the flexible display forms a considerable portion of the front surface of the electronic device in an unfolded state, and the user may use services provided through the large screen while the foldable electronic device is unfolded.

As another example, the user may use the electronic device while fully folding the foldable electronic device or folding the same at a specific angle, and may also use the electronic device while carrying the same with one hand or both hands.

As described above, the service provided through foldable electronic devices and the environment in which users use electronic devices are gradually diversified, and user demands for interaction functions between electronic devices and users are accordingly increasing gradually
US 20180242446A1 relates to a foldable electronic device and a control method of the foldable electronic device.
US 20180198896A1 relates to a mobile terminal comprising a flexible display unit being bent according to a change in an angle of a hinge part.
US 20160026381A1 relates to a mobile terminal having an inner surface, an outer surface and side surfaces, and configured to be opened into an open state and closed into a closed state.

### [Disclosure of Invention]

### [Technical Problem]

The connection part of the foldable electronic device may be exposed to the outside or contact the user's body depending on the state or environment in which the same is used, and does not provide an interaction function between the user and the device, although the same provides a function for folding the housing.

Various embodiments of the disclosure provide an electronic device configured to provide various interaction functions with the user through a connection part capable of acquiring user inputs, thereby satisfying user demands for interaction functions described above.

### [Solution to Problem]

The present invention is defined by the independent claim. Further aspects of the present invention are outlined in the dependent claims. An electronic device according to various examples may include a housing including multiple parts and at least one connection part configured to connect the multiple parts, respectively, a front display disposed in a space formed by the housing, and bendable according to an angle formed by the multiple parts, a touch sensor disposed in a first connection part configured to connect, to each other, a first part and a second part among the multiple parts or on the first connection part, at least one sensor different from the touch sensor and disposed in the housing, and at least one processor electrically connected to the front display, the touch sensor, and the at least one sensor, wherein the at least one processor is configured to determine, based on a value acquired by the at least one sensor, an angle formed by the first part and the second part, determine a current operation mode of the electronic device among multiple operation modes supported while the first part and the second part form an acute angle, perform, based on a user input acquired through a first region of the touch sensor, a first function when the determined operation mode is a first mode, and perform, based on a user input acquired through the first region of the touch sensor, a second function different from the first function when the determined operation mode is a second mode.

An electronic device according to various examples may include a housing including a first part, a second part, and a connection part configured to connect the first part to the second part, the first part and the second part being rotatably coupled to the connection part, the first part including a first side region and a second side region formed at a side opposite to the first side region, a front display disposed in a space formed by the housing, and bendable according to an angle formed by the first part and the second part, an auxiliary display disposed on a surface opposite to the front display at the first part, at least one processor disposed in the space formed by the housing, a touch sensor disposed in the connection part or on the connection part and electrically connected to the at least one processor, and at least one sensor different from the touch sensor and disposed in the housing, wherein the at least one processor is configured to identify, based on a value acquired by the at least one sensor, whether at least one of at least a portion of the first side region and at least a portion of the second side region has touched a body of a user of the electronic device, identify, based on a value acquired by the at least one sensor, an angle formed by the first part and the second part, activate a first region of the touch sensor, activate the front display, and deactivate the auxiliary display, when at least a portion of the first side region and at least a portion of the second side region touch the user's body and when the angle formed by the first part and the second part is within a first designated angle range, and activate the first region of the touch sensor, deactivate the front display, and activate the auxiliary display, when at least a portion of the first side region and at least a portion of the second side region touch the user's body and when the angle formed by the first part and the second part is not within the first designated angle range.

### [Advantageous Effects of Invention]

An electronic device according to an embodiment may acquire user inputs through a connection part of the foldable electronic device, thereby providing improved user experiences conforming to various services provided and various user environments.

An electronic device according to an embodiment may output various feedbacks corresponding to user inputs acquired through a connection part of the foldable electronic device, thereby improving user experiences.

An electronic device according to an embodiment may differently map a function corresponding to a user input according to the environment in which the electronic device is used and/or the type of a provided service, or may differently configure an area in which user inputs can be acquired, thereby improving user experiences and user convenience.

### [Brief Description of Drawings]

FIG. 1 is a block diagram of an electronic device in a network environment according to an embodiment.
FIG. 2 illustrates a state in which an electronic device according to an embodiment is unfolded.
FIG. 3 illustrates a state in which an electronic device according to an embodiment is folded.
FIG. 4A schematically illustrates an electronic device according to an embodiment.
FIG. 4B illustrates examples in which a touch input region is disposed in a connection part according to an embodiment.
FIG. 5 is a flowchart showing a method for operating in a first folding mode or a second folding mode by an electronic device according to an embodiment.
FIG. 6 illustrates an example of a first folding mode and a second folding mode according to an embodiment.
FIG. 7 illustrates another example in which an electronic device according to an embodiment operates in a first folding mode while being in two-handed grip state.
FIG. 8 is a flowchart showing a method for operating in a tent mode by an electronic device according to an embodiment.
FIG. 9 illustrates a case in which a connection part of an electronic device according to an embodiment faces a direction opposite to a gravity direction.
FIG. 10 illustrates examples in which an electronic device according to an embodiment operates in a tent mode.
FIG. 11 is a flowchart showing a method for configuring an activation region of a touch sensor, based on the state of an electronic device according to an embodiment.
FIG. 12 illustrates an example in which an electronic device according to an embodiment activates a first region of a touch sensor and operates.
FIG. 13 is a flowchart showing a method for configuring an activation region of a touch sensor, based on the state of an electronic device according to an embodiment.
FIG. 14 illustrates an example in which an electronic device according to an embodiment activates a second region of a touch sensor and operates and an example in which the electronic device activates a third region of the touch sensor and operates.
FIG. 15 illustrates a state in which an electronic device according to another embodiment is unfolded.
FIG. 16 illustrates a state in which an electronic device according to another embodiment is completely folded.
FIG. 17 illustrates a state in which an electronic device according to another embodiment is folded.
FIG. 18 illustrates examples in which an electronic device according to another embodiment operates in a first folding mode and a second folding mode.
FIG. 19A illustrates an example in which an electronic device according to another embodiment operates in a tent mode.
FIG. 19B illustrates an example in which an electronic device according to another embodiment operates in a tent mode.
FIG. 20 illustrates an example in which an electronic device according to another embodiment activates a first region of a touch input region and operates.
FIG. 21 is a flowchart showing a method for configuring an activation region of a touch sensor, based on the state of an electronic device according to another embodiment.
FIG. 22 illustrates an example in which an electronic device according to another embodiment activates a second region of a touch sensor and operates, and an example in which the electronic device activates a third region of the touch sensor and operates.
FIG. 23 is a flowchart showing a method for configuring an activation region of a touch sensor, based on the state of an electronic device according to another embodiment.

### [Mode for Carrying out the Invention]

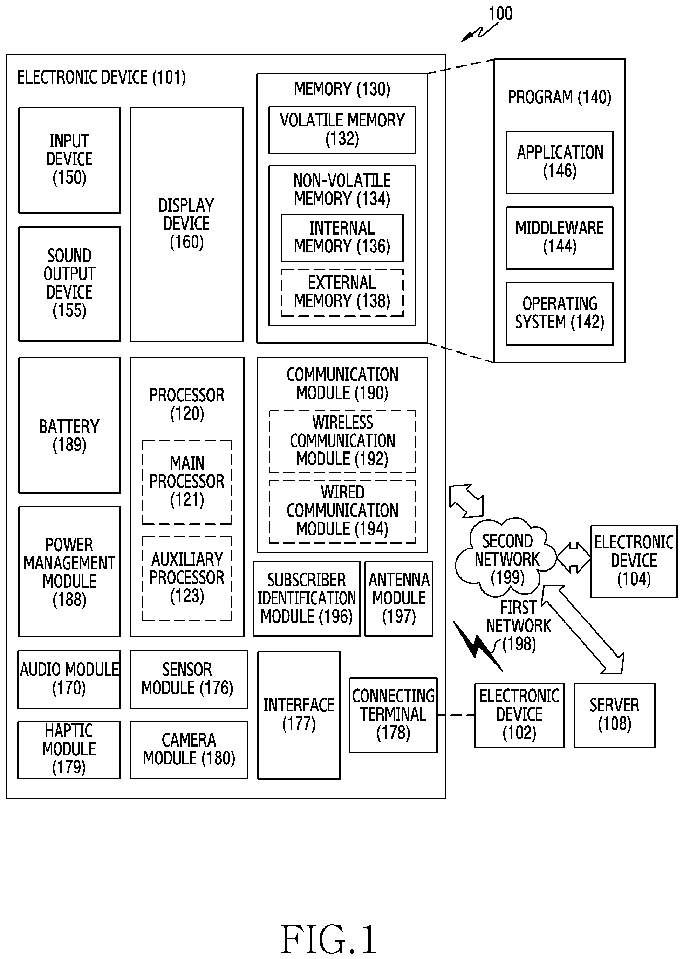

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101) . For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

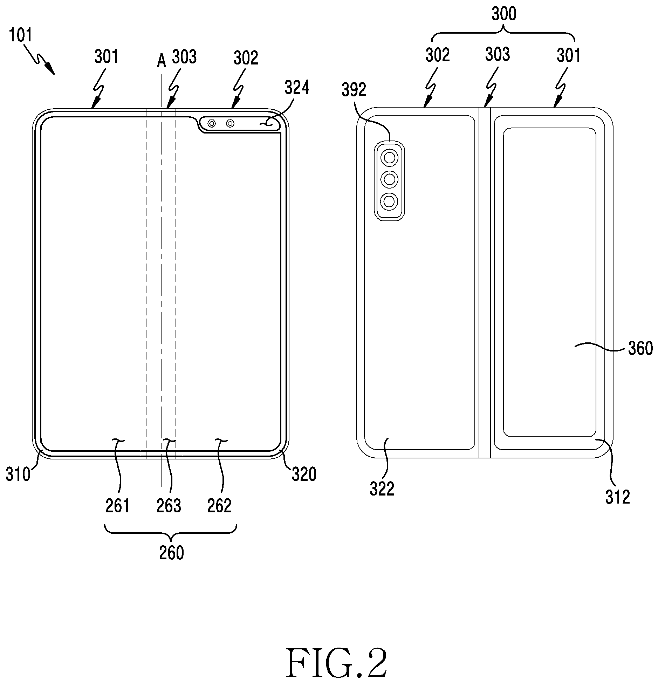

FIG. 2 illustrates a state in which an electronic device 101 according to an embodiment is unfolded.

Referring to FIG. 2, the electronic device 101 according to an embodiment may include a housing 300, a flexible display 260 (e.g., the display device 160 in FIG. 1), and an auxiliary display 360 (e.g., the display device 160 in FIG. 1).

Herein, a surface on which the flexible display 260 is disposed while the electronic device 101 is unfolded is defined as a front surface of the electronic device 101, a surface which is opposite to the front surface while the electronic device 101 is unfolded and on which an auxiliary display 360 is disposed is defined as a rear surface of the electronic device 101, and a surface which is formed to extend from the edge of the front surface to the edge of the rear surface and is viewed from outside is defined as a side surface of the electronic device 101.

According to an embodiment, the housing 300 may include a first part 301, a second part 302, and a connection part 303 coupled to the first part 301 and the second part 302.

In an embodiment, the first part 301 may include a first housing structure 310 and a first rear cover 312.

In an embodiment, the first housing structure 310 may form a portion of the front surface of the first part 301, and a side surface. In an embodiment, a portion of the side surface of the first part 301 may be coupled to the connection part 330, and thus may not be viewed from outside while the electronic device 101 is unfolded. In an embodiment, the first housing structure 310 may contain metal and/or polymer.

In an embodiment, the first rear cover 312 may be coupled to the first housing structure 310, and may form a portion of a rear surface of the first part 301. The portion of the rear surface of the first part 301 may be formed by the first rear cover 312, or may be formed by the first housing structure 310 and the first rear cover 312.

In an embodiment, the periphery of the first rear cover 312 may be surrounded by the first housing structure 310. Unlike the above description, in another embodiment, the first housing structure 310 and the first rear cover 312 may be integrally formed.

In an embodiment, the first rear cover 312 may contain metal and/or polymer.

In an embodiment, the auxiliary display 360 may be at least partially received and disposed in a space formed by the first housing structure 310 and/or the first rear cover 312. For example, at least a portion of the auxiliary display 360 may be disposed in the first part 301, and the remaining portion thereof may be viewed through the rear surface of the first part 301.

In an embodiment, the auxiliary display 360 may form at least a portion of the rear surface of the first part 301. For example, a portion of the rear surface of the first part 301 may be formed by the auxiliary display 360, and the remaining portion of the rear surface may be formed by the first housing structure 310 and/or the first rear cover 312. In another embodiment, the entire rear surface of the first part 301 may be formed by the auxiliary display 360. In this case, the above-mentioned first rear cover 312 may be omitted.

In an embodiment, the auxiliary display 360 may further include a substantially transparent glass plate (or polymer plate). The glass plate may be formed in a shape mostly similar to the exterior shape of the auxiliary display 360, and may be disposed on the front surface of the first part 301. In an embodiment, a display region of the auxiliary display 360 may be viewed from outside through the glass plate.

In another embodiment, although not illustrated, the auxiliary display 360 may further include a recess or an opening formed in a portion of the display region. In this case, at least one among the audio module 170, the sensor module 176, and the camera module 180 may be aligned in the recess or the opening and disposed in the first part 301.

In an embodiment, the second part 302 may include a second housing structure 320, a second rear cover 322, and a sensor region 324.

In an embodiment, the second housing structure 320 may form a portion of a front surface of the second part 302, and a side surface thereof. In an embodiment, a portion of the side surface of the second part 302 may be coupled to the connection part 330, and may not be viewed from outside while the electronic device 101 is unfolded. In an embodiment, the second housing structure 320 may contain metal and/or polymer.

In an embodiment, the second rear cover 322 may be coupled to the second housing structure 320, and may form at least a portion of the rear surface of the second part 302. For example, the second rear cover 322 may form the entire rear surface of the second part 302. In another example, the second rear cover 322 may form most of the rear surface of the second part 302, and the second housing structure 320 may form the remaining portion of the rear surface.

In an embodiment, the periphery of the second rear cover 322 may be surrounded by the second housing structure 320. Unlike the above description, in another embodiment, the second housing structure 320 and the second rear cover 322 may be integrally formed.

In an embodiment, the second rear cover 322 may contain metal and/or polymer.

In an embodiment, the second rear cover 322 may include a rear region 392 in which various components are disposed. In an embodiment, the rear region 392 may be formed on a surface opposite to the flexible display 260 at the second part 302. In an embodiment, at least one component or sensor may be visually exposed through the rear region 392 of the second rear cover 322. In an embodiment, the sensor may include a proximity sensor and/or a rear camera.

In an embodiment, the sensor region 324 may be formed to have a predetermined region while being adjacent to one corner of the second part 302 (or the second housing structure 320). However, the arrangement, the shape, and the size of the sensor region 324 are not limited to the illustrated example. For example, in another embodiment, the sensor region 324 may be provided in a predetermined region at another corner of the second part 302 or between the top corner and the bottom corner thereof. In an embodiment, components embedded in the electronic device 101 so as to perform various functions may be exposed on the front surface of the electronic device 101 through the sensor region 324 or through at least one opening provided in the sensor region 324. In an embodiment, the components may include various types of sensors. For example, the sensors may include at least one among, for example, a front camera, a receiver, or a proximity sensor.

In an embodiment, the first housing structure 310 and the second housing structure 320 may form a recess, which receives the flexible display 260, together. In an embodiment, due to the sensor region 324, the recess may have at least two different widths in a direction perpendicular to a folding axis A. The width of the recess is not limited to the illustrated example. In an embodiment, the recess may have multiple widths due to the type of the sensor region 324 or a portion having the asymmetric shape of the first housing structure 310 and the second housing structure 320.

In an embodiment, the first housing structure 310 and the second housing structure 320 may be at least partially formed of a metal material or a nonmetal material having a selected level of rigidity in order to support the display 260.

In an embodiment, the first part 301 and the second part 302 may be coupled to the connection part 303. In another embodiment, the connection part 303 may be formed integrally with the first part 301 and/or the second part 302.

In an embodiment, the connection part 303 may be disposed between the first part 301 and the second part 302. The connection part 303 may be formed such that each of the first part 301 and the second part 302 is rotatable, foldable, or bendable about the connection part 303. For example, the connection part 303 may include a hinge structure including multiple gears, and the hinge structure may be coupled to the first part 301 and the second part 302. In this case, the connection part 303 may further include a hinge cover capable of covering the hinge structure. The hinge cover may include a curved surface. In an embodiment, various components, such as a touch sensor, may be disposed in the connection part 303. The touch sensor may be electrically connected to the hinge cover so as to acquire a user input through the hinge cover. In another embodiment, the touch sensor may be disposed on the connection part 303. In this case, the touch sensor may include a touch input region for receiving a user input, and the touch sensor may be exposed to the outside of the connection part 303 so as to acquire a user input.

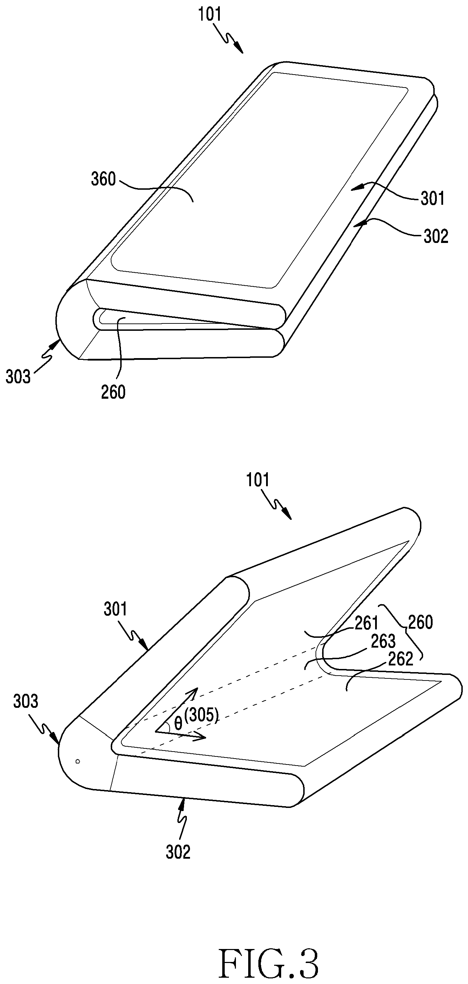

In an embodiment, when the rear surface of the electronic device 101 is seen while the electronic device 101 is unfolded, at least a portion of the connection part 303 may be covered by the first rear cover 312 and the second rear cover 322, and thus may not be viewed. At least a portion of the connection part 303 may be viewed from outside while the electronic device 101 is folded (e.g., FIG. 3).

In an embodiment, the first part 301 and the second part 302 may be disposed at both side of the connection part 303 so as to be opposite to each other with reference to the connection part 303.

In an embodiment, at least a portion of the flexible display 260 may be received in a space (or a recess) formed by the housing 300 and disposed at the front surface of the electronic device 101. For example, at least a portion of the flexible display 260 may be disposed in the housing 300, and the remaining portion may be viewed through the front surface of the electronic device 101.

In an embodiment, while the electronic device 101 is unfolded, the flexible display 260 may form at least a portion of the front surface. For example, the entire front surface of the electronic device 101 may be formed by the flexible display 260. In another example, a portion of the front surface of the electronic device 101 may be formed by the flexible display 260, and the remaining portion of the front surface may be formed by the first housing structure 310 and/or the second housing structure 320.

In an embodiment, the flexible display 260 may be bent or deformed according to the folding operation of the electronic device 101. In an embodiment, the flexible display 260 may include a first region 261, a second region 262, and a third region 263. In an embodiment, the first region 261 of the flexible display 260 may correspond to the first part 301, the second region 262 may correspond to the second part 302, and the third region 263 may correspond to the connection part 303. However, the above-mentioned division of the region of the flexible display 260 is for illustrative purposes. Division of the region of the flexible display 260 may be performed to be different from the above-mentioned division. For example, the flexible display 260 may be divided into a folding region 263, which is a region substantially deformed depending on the folding operation of the electronic device 101, and the first region 261 and the second region 262, which are separate from each other with reference to the deformed region.

In an embodiment, the first region 261 and the second region 262 may be shaped to be overall symmetric with reference to the third region 263. However, unlike the first region 261, the second region 262 may include a cut notch due to the presence of the sensor region 324, but, in other regions, may be symmetric with the first region 261. In other words, the flexible display 260 may include a portion, at which the first region 261 and the second region 262 are symmetric with each other, and a portion at which the first region 261 and the second region 262 are asymmetric with each other.

In an embodiment, as illustrated in FIG. 2, when the electronic device 101 is unfolded, the first part 301 and the second part 302 may be disposed to form an angle of 180 degrees therebetween. The surface of the first region 261 of the flexible display 260 and the surface of the second region 262 may form 180 degrees therebetween, and may face an identical direction (e.g., a direction faced by a front surface 315 of the electronic device. The third region 263 may form an identical flat surface with the first region 261 and the second region 262.

In an embodiment, the electronic device 101 may further include a key input device which is not illustrated. The key input device may include a function button such as a volume adjustment button or a power button. The key input device may be formed in various types, for example, a physical key and/or a soft key.

FIG. 3 illustrates a state in which the electronic device 101 according to an embodiment is folded.

In an embodiment, the first part 301 may be pivoted or rotated, folded, or flexed or bent with reference to the connection part 303.

In an embodiment, the second part 302 may be pivoted or rotated, folded, or flexed or bent with reference to the connection part 303.

In an embodiment, an angle θ 305 and a distance between the first part 301 and the second part 302 may vary depending on whether the electronic device 101 is in an unfolded state or in a folded state. In an embodiment, the angle θ 305 and the distance between the first part 301 and the second part 302 may vary depending on the extent by which the electronic device 101 is folded.

In an embodiment, the flexible display 260 may be bent or deformed by the folding operation of the electronic device 101. In an embodiment, by the folding operation of the electronic device 101, the third region 263 of the flexible display 260 may be folded or bent, and the first region 261 and the second region 262 may face each other.

In an embodiment, at least a portion of the first region 261 of the flexible display 260 and at least a portion of the second region 262 may be in contact with each other while the electronic device 101 is completely folded. For example, when the electronic device 101 is in a completely folded state, one portion of the first region 261 of the flexible display 260 and one portion of the second region 262 may be brought into contact with each other while forming a narrow angle (e.g., 0 to 10 degrees), and at least a portion of the third region 263 may be formed as a curved surface having a predetermined curvature. In another example, while the electronic device 101 is completely folded, the entirety of the first region 261 may be in contact with the entirety of the second region 262.

According to an embodiment, while the electronic device 101 is completely folded, the flexible display 260 may not be viewed by a user.

In an embodiment, when the electronic device 101 is in an intermediate state (a folded state), the first part 301 and the second part 302 may be arranged with a certain angle a certain angle θ 305 therebetween. The surface of the first region 261 of the display 260 and the surface of the second region 262 may form the angle θ 305 that is larger than in the folded state and smaller than in the unfolded state. At least a portion of the third region 263 may be formed as a curved surface having a predetermined curvature, and the curvature is smaller than that in the folded state.

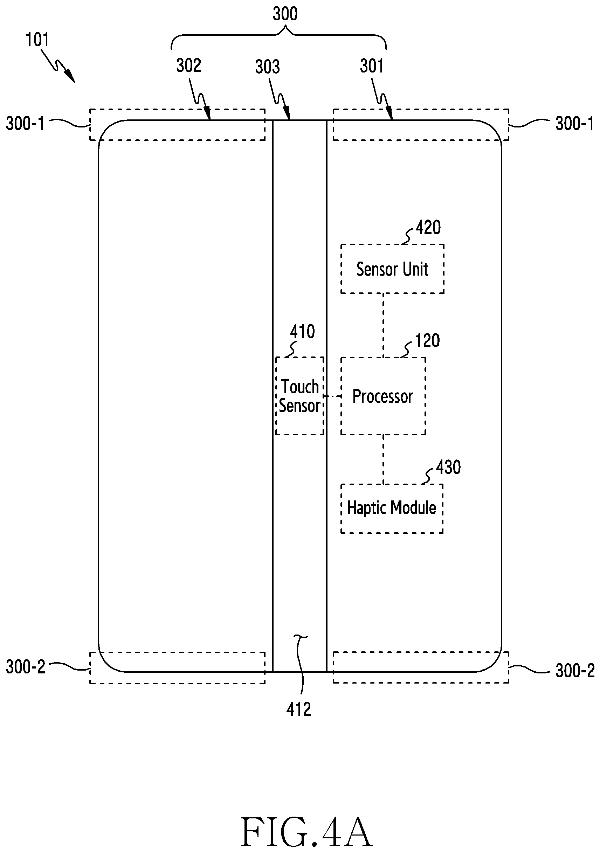

FIG. 4A schematically illustrates an electronic device 101 according to an embodiment.

The electronic device 101 according to an embodiment may include a touch sensor 410, a sensor unit 420, a haptic module 430 (e.g., the haptic module 179 in FIG. 1), and a processor 120 operatively coupled to the touch sensor 410, the sensor unit 420, and the haptic module 430.

In an embodiment, the touch sensor 410 may be disposed in the connection part 303. At least a portion of a region forming the exterior of the connection part 303, for example, at least a portion of a hinge cover, may be formed as a touch input region 412 for receiving a touch input.

In another embodiment, the touch sensor 410 may be disposed on the connection part 303. The touch sensor 410 may include the touch input region 412. The touch sensor 410 including the touch input region 412 may be disposed to be at least partially viewed at the rear surface of the electronic device 101. The touch input region 412 may form at least a portion of the exterior of the connection part 303.

In another embodiment, unlike the above description, the touch sensor 410 may be disposed at the first part 301 or the second part 302 other than the connection part 303. However, even in this case, the touch input region 412 may be disposed in the connection part 303 or on the connection part 303.

In an embodiment, the type of the touch sensor 410 may include a capacitive type, a resistive type, a piezoelectric type, an infrared type, and an ultrasonic type, but is not limited thereto.

For example, when the touch sensor 410 is a capacitive type touch sensor, the touch input region 412 may include at least one electrode layer and at least one dielectric layer. In an embodiment, the touch sensor 410 may acquire information about capacitance changing as an external conductive object (e.g., a person's finger) physically touches or approaches the touch input region 412. In an embodiment, the touch sensor 410 may sense, based on the information about the capacitance, a position on the touch input region 412 in which an external object touches or approaches the touch input region 412. The touch sensor 410 may provide the sensed position to the processor 120. In another embodiment, the touch sensor 410 may provide data on the capacitance to the processor 120, and the processor 120 may sense, based on the data on the capacitance, a position on the touch input region 412 in which an external object touches or approaches the touch input region 412.

In an embodiment, the touch sensor 410 may include a touch circuit.

In an embodiment, the at least one electrode may include various conductive materials. For example, indium tin oxide (ITO), indium zinc oxide (IZO), copper oxide, poly(3,4-ethylenedioxythiophene) (PEDOT), a metal mesh, or a carbon nanotube (CNT) may include various materials, such as a nanowire (Ag nanowire), a transparent polymer conductor, or graphene. In an embodiment, materials included in the at least one electrode, respectively may be different from each other.

In an embodiment, the at least one dielectric layer may include one or a combination of at least two, selected from among silicon, air, a membrane, a double-sided adhesive film, a pressure sensitive adhesive (PSA), an optically clear adhesive (OCA), an optical clear resin (OCR), a sponge, a rubber, ink, acrylonitrile butadiene styrene (ABS), acrylic, polycarbonate (PC), polymethyl methacrylate (PMMA), polyimide (PE), polyethylene terephthalate (PET), polypropylene terephthalate (PPT), amorphous polyethylene terephthalate (APET), polyethylene naphthalate terephthalate (PEN), polyethylene terephthalate glycol (PETG), tri-acetyl-cellulose (TAC), cyclic olefin polymer (COP), cyclic olefin copolymer (COC), polydicyclopentadiene (DCPD), cyclopentdienyl anions (CPD), polyarylate (PAR), polyethersulfone (PES), poly ether imide (PEI), modified epoxy resin, or acrylic resin. In an embodiment, materials included in the at least one dielectric layer, respectively may be different from each other.

In an embodiment, when the at least one electrode layer corresponds to one electrode layer, the at least one dielectric layer may be disposed on the at least one electrode layer. In another embodiment, when the at least one electrode layer corresponds to multiple electrode layers, the at least one dielectric layer may be embedded and disposed between the multiple electrode layers.

In an embodiment, the touch sensor 410 may be electrically connected to the touch input region 412. The touch sensor 410 may acquire a user input through the touch input region 412.

In an embodiment, the touch sensor 410 may include at least one processor (or controller) which is different from the processor 120. The touch sensor 410 may generate data (or information) based on the user input received through the touch input region 412. The touch sensor 410 may provide the generated data (or information) to the processor 120. The processor 120 may identify, based on the provided data (or information), a position in which the user input has been acquired, a time during which the user input is maintained, etc. and may control the electronic device 101, based on the identification.

In an embodiment, the touch sensor 410 may further include a pressure sensor which is not illustrated. The touch sensor 410 may generate a value corresponding to the pressure (or strength) of the user input acquired through the touch input region 412, and may provide the generated value to the processor 120. The processor 120 may identify, based on the provided value, the pressure (or strength) of the acquired user input.

In an embodiment, the sensor unit 420 may include at least one sensor which is different from the touch sensor 410. For example, the sensor unit 420 may include at least one of an acceleration sensor and a gravity sensor for identifying the posture of the electronic device 101, and may include a grip sensor for identifying whether the electronic device 101 has been gripped by a user.

In an embodiment, the sensor unit 420 may generate a value corresponding to the state of the electronic device 101, sensed by various sensors included in the sensor unit 420, and may provide the generated value to the processor 120. The processor 120 may identify the state of the electronic device 101, based on the provided value.

For example, the sensor unit 420 may use the gravity sensor and/or the acceleration sensor to generate a value corresponding to a folded state or a folded angle of the electronic device 101, and may provide the generated value to the processor 120. The processor 120 may identify, based on the provided value, the angle θ 305 formed by the first part 301 and the second part 302.

In another example, the sensor unit 420 may use the gravity sensor and/or the acceleration sensor to generate a value corresponding to a direction faced by the connection part 303, and may provide the generated value to the processor 120. The processor 120 may identify, based on the provided value, a direction faced by the connection part 303, for example, whether a direction faced by the connection part 303 is a gravity direction or a direction opposite the gravity direction.

In another example, the sensor unit 420 may sense, using the grip sensor, whether the housing 300 has been gripped by a user, to generate a value corresponding to the sensed state, and may provide the generated value to the processor 120. The processor 120 may identify, based on the provided value, a state in which the housing 300 is gripped by the user (or a state in which the user's body touches the housing 300). The processor 120 may identify, for example, whether the user's body touches at least a portion of a first side region 300-1 of the first part 301 and/or at least a portion of a second side region 300-2. In an embodiment, the grip sensor may be used in various ways. For example, the processor 120 may identify the gripped state, based on capacitance changing as the user' body touches the first side region 300-1 and/or the second side region 300-2. In another example, the processor 120 may use the first side region 300-1 and the second side region 300-2 of the housing 300 as an antenna radiator for wireless communication, and the processor 120 may also identify the gripped state, based on radiation performance of a wireless signal, changing as the user' body touches the first side region 300-1 and/or the second side region 300-2. However, a method for identifying the gripped state of the electronic device 101 is not limited to one method, and various methods easy for those skilled in the art may be applied.

In an embodiment, the sensor unit 420 may be disposed in the first part 301. In another embodiment, the sensor unit 420 may be disposed at the second part 302 or the connection part 303 other than the first part 301. In another embodiment, multiple gravity sensors and multiple acceleration sensors may be included in the sensor unit 420. In this case, the gravity sensors and the acceleration sensors may be disposed in at least one among the first part 301, the second part 302, and the connection part 303, respectively. In another embodiment, multiple grip sensors may be included in the sensor unit 420. In this case, the multiple grip sensors may be disposed in at least one of the first part 301 and the second part 302.

In an embodiment, the haptic module 430 may be disposed in the first part 301. In another embodiment, the haptic module 430 may be disposed in the second part 302 other than the first part 301, or may be disposed at both the first part 301 and the second part 302, and is not limited thereto. There may be at least one haptic module 430.

In an embodiment, the haptic module 430 may include at least one actuator. The haptic module 430 may use the actuator to produce a vibration or haptic effect based on a touch position and/or touch pressure of an external object. The haptic module 430 may produce a vibration or haptic effect with different intensities depending on the magnitude of pressure. For example, the haptic module 430 may produce a vibration or haptic effect having a higher intensity as the pressure of the external object is higher.

In an embodiment, the processor 120 may be disposed in the first part 301. Although not illustrated, the processor 120 may also be disposed in the second part 302, and is not limited thereto.

In an embodiment, the processor 120 may determine an operation mode of the electronic device 101 among multiple operation modes supported when an angle formed by the first part 301 and the second part 302 is within a designated angle range. For example, when the angle formed by the first part 301 and the second part 302 is an acute angle, the processor 120 may determine that a first mode of multiple operation modes supported by the electronic device 101 is a current operation mode of the electronic device 101, and may make the electronic device 101 operate in the first mode. When the determined operation mode is the first mode, the processor 120 may perform a first function, based on a user input performed through a first region of the touch sensor 410, and when the determined operation mode is a second mode, may perform a second function, based on a user input performed through the first region of the touch sensor 410.

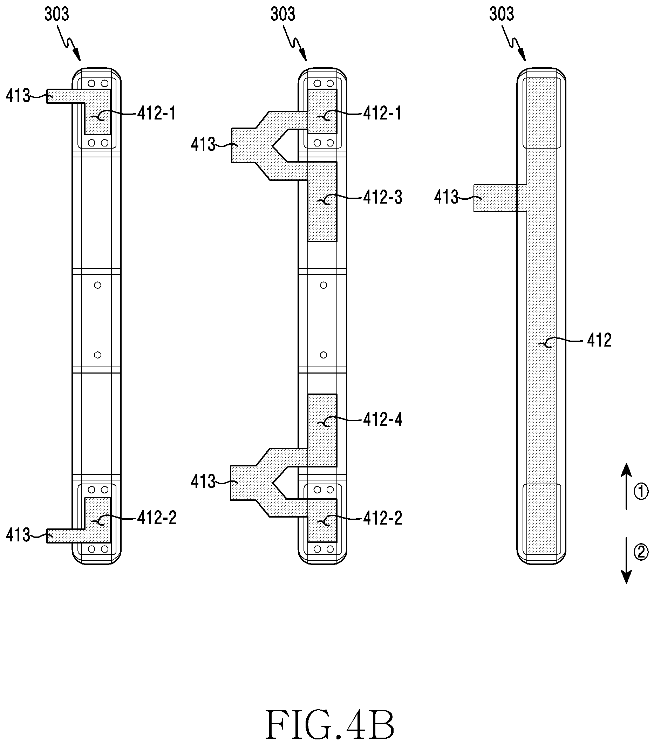

FIG. 4B illustrates examples in which a touch input region 412 is disposed in a connection part 303 according to an embodiment.

Referring to FIG. 4B, the touch input region 412 may be disposed in the connection part 303 or on the connection part 303, and the touch input region 412 may be formed in at least a portion of the connection part 303.

For example, as in the connection part 303 illustrated on the left in FIG. 4B, the touch input region 412 may include a first region 412-1 disposed to be biased in direction ① at the connection part 303, and a second region 412-2 opposite to the first region 412-1 and disposed to be biased in direction ② at the connection part 303.

In another example, as in the connection part 303 illustrated in the middle in FIG. 4B, the touch input region 412 may include not only the first region 412-1 and the second region 412-2, described above, but also a third region 412-3 and a fourth region 412-4. The third region 412-3 may be spaced apart from the first region 412-1, and may be disposed to be biased in direction ① at the connection part 303. The fourth region 412-4 may be spaced apart from the second region 412-2, and may be disposed to be biased in direction ② at the connection part 303.

In another example, like the connection part 303 illustrated on the right in FIG. 4B, the touch input region 412 may be formed or disposed to occupy most of the connection part 303.

In an embodiment, a wiring member 413 may be electrically connected to the touch input region 412, and may electrically connect the touch input region 412 to the touch sensor 410 and/or the processor 120. The wiring member 413 may include a flexible printed circuit board.

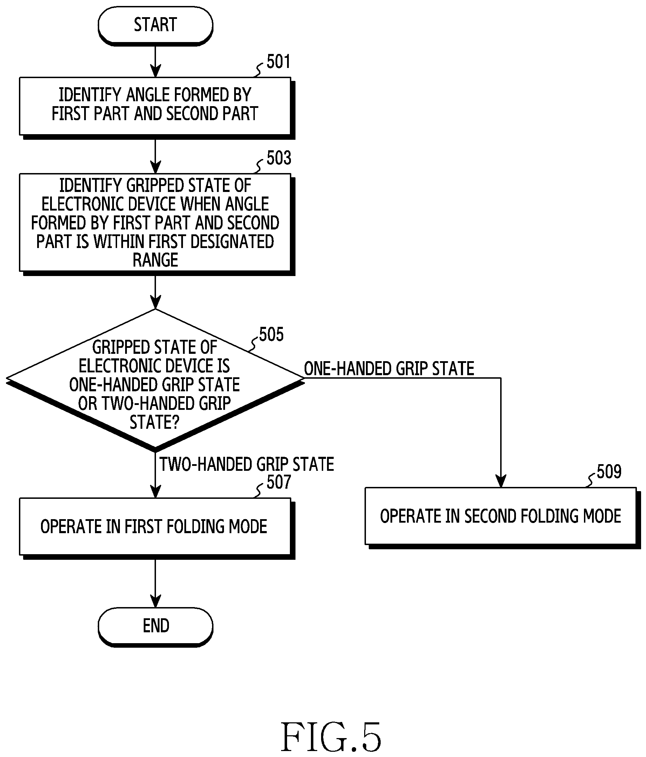

FIG. 5 is a flowchart showing a method for operating in a first folding mode or a second folding mode by an electronic device according to an embodiment.

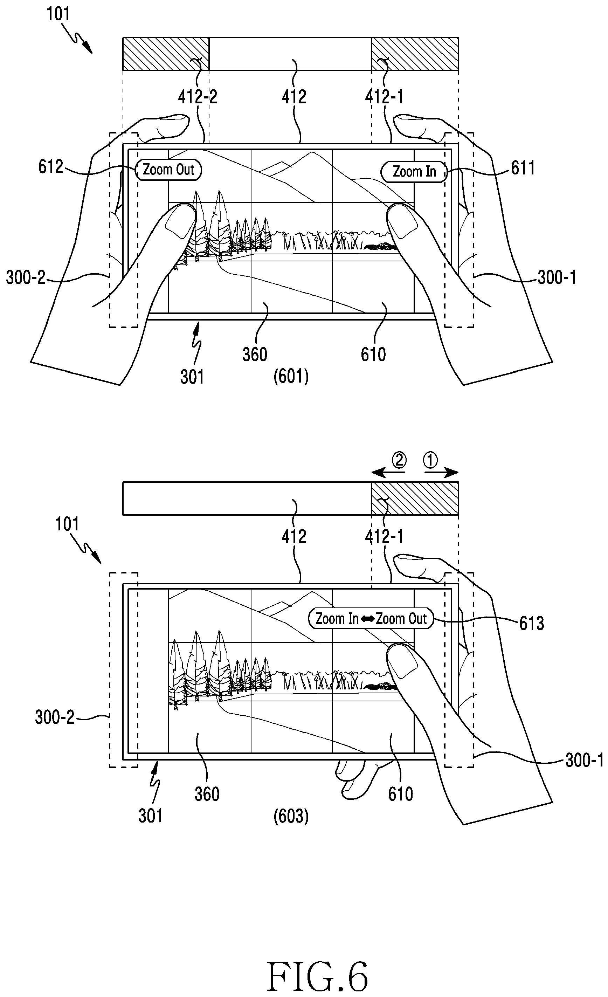

FIG. 6 illustrates an example of a first folding mode and a second folding mode according to an embodiment.

FIG. 5 and embodiments below may be performed by the electronic device 101 and the processor 120 of the electronic device 101.

Referring to FIG. 5, in operation 501, the electronic device 101 may identify an angle formed by a first part and a second part. For example, the processor 120 may identify, based on a value acquired by the sensor unit 420, the angle θ 305 formed by the first part 301 and the second part 302.

In operation 503, when the angle formed by the first part and the second part is within a first designated range, the electronic device 101 may identify a gripped state of an electronic device. For example, the processor 120 may use the sensor unit 420 to determine that the angle formed by the first part 301 and the second part 302 is within a first designated range, and may identify, in response to the determination, the gripped state of the electronic device 101. For example, the processor 120 may identify whether a user's body touches at least a portion of the first side region 300-1 of the housing 300 and/or at least a portion of the second side region 300-2. In an embodiment, when an angle formed by the first part 301 and the second part 302 is within a first designated range, the angle formed by the first part 301 and the second part 302 may be an acute angle, and the first designated range may be 0° to 90°.

In operation 505, the electronic device 101 may determine whether the gripped state of the electronic device is a one-handed grip state or a two-handed grip state.

For example, when it is identified that the user's body has touched at least a portion of the first side region 300-1, and it is identified that the user's body has not touched at least a portion of the second side region 300-2, the processor 120 may determine that the gripped state of the electronic device 101 is "a one-handed grip state". In another example, when the processor 120 identifies that the user's body has touched at least a portion of the second side region 300-2 and identifies that the user's body has not touched at least a portion of the first side region 300-2, the processor 120 may determine that the gripped state of the electronic device 101 is "the one-handed grip state".

For example, when it is identified that the user's body has touched at least a portion of the first side region 300-1 and at least a portion of the second side region 300-2, the processor 120 may determine that the gripped state of the electronic device 101 is "a two-handed grip state".

In an embodiment, when the processor 120 determines the gripped state of the electronic device 101 to be "the two-handed grip state", operation 507 may be performed, and when the processor 120 determines the gripped state of the electronic device 101 to be "the one-handed grip state", operation 509 may be performed.

In operation 507, the electronic device 101 may operate in a first folding state. For example, the processor 120 may operate the electronic device 101 in the first folding mode in response to determining that the gripped state of the electronic device 101 is the two-handed grip state.

For example, referring to reference numeral 601 in FIG. 6, in the first folding mode, the processor 120 may perform a first function, based on a user input acquired through the first region 412-1 of the touch input region 412. The processor 120 may execute an application related to a camera (e.g., the camera module 180 in FIG. 1), and may display a preview image 610 on the auxiliary display 360, based on at least a portion of an image acquired by the camera. The processor 120 may perform, as the first function, zooming in the camera, based on a user input acquired through the first region 412-1. The processor 120 may display, on the auxiliary display 360, a preview image zoomed in based on at least a portion of an image acquired by the zoomed-in camera.

In an embodiment, the user input acquired through the first region 412-1 may be a tap input touching one point in the first region 412-1. The processor 120 may zoom in, based on the tap input, the camera at designated magnification. For example, the processor 120 may zoom in the camera so as to correspond to the number of times the tap input is performed or a time during which the tap input is maintained.

In an embodiment, while operating in the first folding mode, the processor 120 may store an image acquired by the zoomed-in camera in a memory of the electronic device 101 when it is identified that the user input acquired through the first region 412-1 exceeds a designated pressure.

In an embodiment, while operating in the first folding mode, the processor 120 may display a visual object indicating the first function on the auxiliary display 360. For example, while operating in the first folding mode, the processor 120 may display a visual object 611 indicating the zoom-in function on the auxiliary display 360 so as to overlap the preview image 610.

In an embodiment, while operating in the first folding mode, the processor 120 may zoom out the camera, based on a user input acquired through the second region 412-2 different from the first region 412-1. The processor 120 may display a zoomed-out preview image on the auxiliary display 360, based on at least a portion of an image acquired by the zoomed-out camera.

In an embodiment, the user input acquired through the second region 412-2 may be a tap input touching one point in the second region 412-2. The processor 120 may zoom out, based on the tap input, the camera at a designated magnification. For example, the processor 120 may zoom out the camera so as to correspond to the number of times the tap input is performed or a time during which the tap input is maintained.

In an embodiment, while operating in the first folding mode, the processor 120 may store an image acquired by the zoomed-out camera in a memory of the electronic device 101 when it is identified that the user input acquired through the second region 412-2 exceeds a designated pressure.

In an embodiment, the processor 120 may display a visual object 612 indicating the zoom-out function on the auxiliary display 360 so as to overlap the preview image 610.

The above-mentioned visual objects 611 and 612 are not limited to the illustrated embodiment, and may include at least one of text and an image.

In various embodiments, in FIG. 5 and below, the first folding mode may be referred to as "first mode", and the second folding mode may be referred to as "second mode".

In operation 509, the electronic device 101 may operate in a second folding mode. For example, the processor 120 may operate the electronic device 101 in the second folding mode in response to determining that the gripped state of the electronic device 101 is a one-handed grip state.

In the second folding mode, for example, referring to reference numeral 603 in FIG. 6, the processor 120 may perform a second function different from the first function of the first folding mode, based on a user input acquired through the first region 412-1 of the touch input region 412. In an embodiment, when operating in the second folding mode, the processor 120 may execute an application related to a camera, and may display a preview image 610 on the auxiliary display 360, based on at least a portion of an image acquired by the camera. The processor 120 may perform, as the second function of the second folding mode, zooming in or zooming out the camera, based on the user input acquired through the first region 412-1. While operating in the seconding mode, the processor 120 may display a zoomed-in or zoomed-out preview image on the auxiliary display 360, based on at least a portion of an image acquired by the zoomed-in or zoomed-out camera.

The user input may be, for example, an input for swiping the first region 412-1. When a user input swiping in a first direction (e.g., direction ①) is acquired, the processor 120 may zoom out the camera, and when a user input swiping in a second direction (e.g., direction ②) different from the first direction, the processor 120 may zoom in the camera. In another example, the direction of a user input corresponding to the zoom-in function may be direction ②, and the direction of a user input corresponding to the zoom-out function may be direction ①. The direction of a swipe input causing the zoom-in or zoom-out of the camera as the second function of the second folding mode is not limited to one direction, but the second direction may be a direction opposite to the first direction.

In an embodiment, while operating in the second folding mode, the processor 120 may display a visual object indicating the second function on the auxiliary display 360. For example, while operating in the second folding mode, the processor 120 may display a visual object 613 indicating the zoom-in or zoom-out function on the auxiliary display 360 so as to overlap the preview image 610.

The above-mentioned visual object 613 is not limited to the illustrated embodiment, and may include at least one of text and an image for indicating the user input and/or the second function.

In an embodiment, while operating in the second folding mode, the processor 120 may store an image acquired by the zoomed-in or zoomed-out camera in a memory of the electronic device 101 when it is identified that the user input acquired through the first region 412-1 exceeds a designated pressure.

In an embodiment, in relation to the electronic device 101 operating in the second folding mode while being in a one-handed grip state, FIG. 6 illustrates only a state in which the electronic device 101 is gripped by the right hand of a user. However, even when the user grips the electronic device only with the left hand, the processor 120 may determine that the gripped state of the electronic device 101 is "a one-handed grip state", and may operate the electronic device 101 in the second folding mode. In this case, the second function may be performed based on the user input acquired through the second region 412-2. For example, when an input swiping in the first direction in the second region 412-2 is acquired, the camera may be zoomed in, and when an input swiping in the second direction opposite to the first direction is acquired, the camera may be zoomed out.

In an embodiment, separation of the first region 412-1 and the second region 412-2 of the touch input region 412 is not limited to the illustrated embodiment. For example, the first region 412-1 and/or the second region 412-2 may become wider or narrower than the illustrated embodiment, or may be appropriately configured by the user.

In an embodiment, the first region 412-1 may correspond to the first side region 300-1, and the second region 412-2 may correspond to the second side region 300-2. For example, the first region 412-1 and the second region 412-2, like the first side region 300-1 and the second side region 300-2, may be disposed or formed to be opposite to each other. In another example, the first region 412-1 may be formed closer to the first side region 300-1 than to the second side region 300-2, and the second region 412-2 may be formed closer to the second side region 300-2 than to the first side region 300-1.

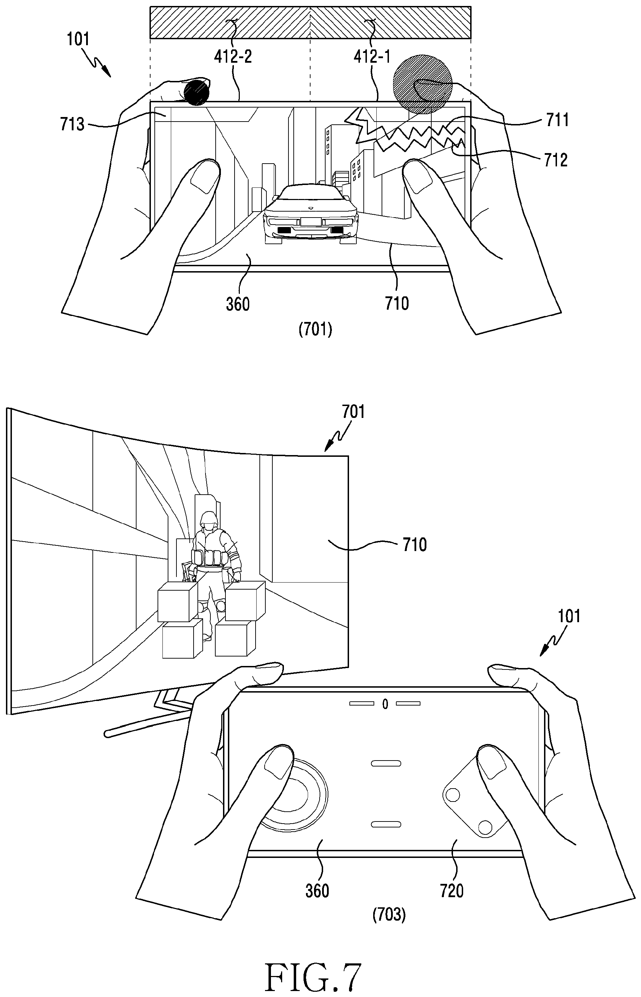

FIG. 7 illustrates another example in which an electronic device 101 according to an embodiment operates in a first folding mode while being in two-handed grip state.

Referring to FIG. 7, the processor 120 may operate the electronic device 101 in a first folding mode (e.g., the first folding mode in operation 507 in FIG. 5).

In an embodiment, in the first folding mode, the processor 120 may execute a game application, and may display an execution screen 710 of the game application on the auxiliary display 360.

In an embodiment, while the electronic device 101 operates in the first folding mode, the processor 120 may perform a first function, based on a user input acquired through the first region 412-1. For example, the processor 120 may acquire a user input through the first region 412-1, and may identify the pressure or strength of the acquired user input. The processor 120 may display, by the first function, visual object 711 and 712 corresponding to the pressure or strength of the user input on the auxiliary display 360. For example, when the pressure of the acquired user input is identified to be a pressure having a first magnitude, the visual object 711 may be displayed, and when the pressure of the acquired user input is identified to be a pressure having a second magnitude larger than a first magnitude, the visual objet 712 larger than the visual object 711 may be displayed.

However, visual objects corresponding to the pressure or strength of user inputs are not limited to the illustrated embodiment, and the processor 120 may differently display the size, shape, color, type, etc. of the visual objects so as to correspond to the pressure or strength of the user inputs.

In another example, the processor 120 may identify pressure of a user input acquired in the first region 412-1, and may use the haptic module 430 to produce a vibration or haptic effect corresponding to the identified pressure. For example, when the pressure of a user input has a first magnitude, the processor 120 may produce, using the haptic module 430, a vibration effect with a first intensity and/or for first duration, and when the pressure of a user input has a second magnitude larger than the first magnitude, the processor 120 may produce a vibration effect with a second intensity larger than the first intensity and/or for second duration longer than the first duration.

In an embodiment, while operating in the first folding mode, the processor 120 may identify pressure or strength of a user input acquired through the second region 412-2, and may display, on the auxiliary display 360, a visual object 713 corresponding to the identified pressure of the user input. For example, the processor 120 may differently display the size, color, type, etc. of the visual object 713, like the visual objects 711 and 712 variously displayed based on user inputs acquired through the first region 412-1.

In an embodiment, while operating in the first folding mode, like a vibration or haptic effect produced according to the pressure of a user input acquired in the first region 412-1, the processor 120 may identify the strength and pressure of a user input acquired in the second region 412-2, and may produce a vibration or haptic effect corresponding to the identified pressure.

In an embodiment, a region of the auxiliary display 360, in which the visual objects 711 and 712 are displayed, may correspond to the first region 412-1, and a region of the auxiliary display 360, in which the visual object 713 is displayed, may correspond to the second region 412-2. For example, the visual objects 711 and 712 and the first region 412-1 may be positioned adjacent to a first corner of the first part 301, and the visual objects 711 and 712 may be displayed in a region of the auxiliary display 360, which is closer to the first region 412-1 than to the second region 412-2. For example, the visual object 713 and the second region 412-2 may be positioned adjacent to a second corner different from the first corner of the first part 301, and the visual object 713 may be displayed on a region of the auxiliary display 360, which is closer to the second region 412-2 than to the first region 412-1. As illustrated in FIG. 7, the first corner may be positioned at a right upper end of the auxiliary display 360, and the second corner may be disposed opposite to the first corner and may be positioned at a left upper end of the auxiliary display 360.

In an embodiment, while operating in the first folding mode, the processor 120 may use the wireless communication module 192 to establish wireless connection with an external electronic device 701. The processor 120 may display an execution screen 710 of a game application on the external electronic device 701 through the established wireless connection.

In an embodiment, the processor 120 may display, on the auxiliary display 360, a user interface 720 related to the game application being executed while wireless connection with the external electronic device 701 is established.

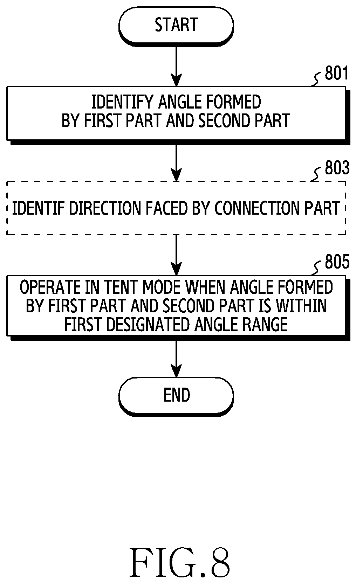

FIG. 8 is a flowchart showing a method for operating in a tent mode by an electronic device 101 according to an embodiment.

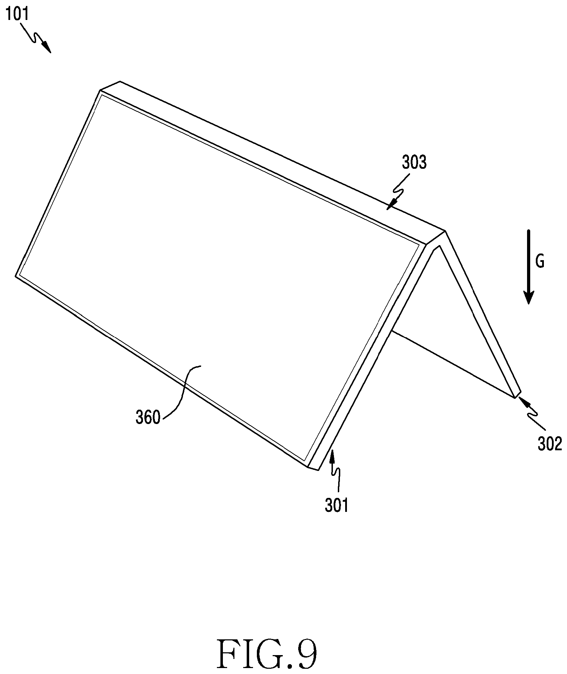

FIG. 9 illustrates a case in which a connection part 303 of an electronic device 101 according to an embodiment faces a direction opposite to a gravity direction.

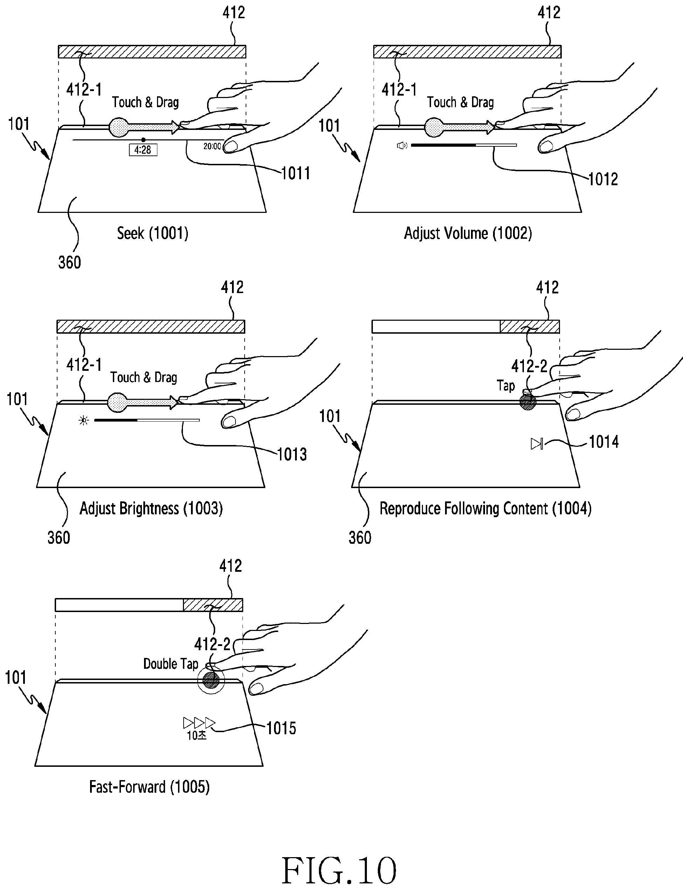

FIG. 10 illustrates examples in which an electronic device 101 according to an embodiment operates in a tent mode.

Referring to FIG. 8, in operation 801, the electronic device 101 may identify an angle formed by a first part and a second part. Operation 801 may be the same as operation 501 in FIG. 5.

In operation 803, the electronic device 101 may identify a direction faced by the connection part. For example, referring to FIG. 9, the processor 120 may use the sensor unit 420 to identify whether a direction faced by the connection part 303 is a gravity direction G or a direction opposite to the gravity direction G.

In an embodiment, operation 803 may be omitted.

When operation 803 is omitted, in operation 805, the electronic device 101 may operate in a tent mode provided that the angle formed by the first part and the second part is within a first designated angle range. The first designated angle range may be greater than 0° and less than 90°. When operation 803 has been performed, in operation 805, the electronic device 101 may operate in a tent mode provided that the angle formed by the first part and the second part is within the first designated angle range and that the connection part faces a direction opposite to the gravity direction.

In an embodiment, when the electronic device 101 operates in the tent mode, the processor 120 may perform a first function, based on a user input acquired through a first region of the touch sensor 410.

For example, referring to FIG. 10, the processor 120 may reproduce media contents on the auxiliary display 360. The processor 120 may perform, as the first function, seeking 1001 of the reproduced media contents, based on a user input acquired through the first region 412-1 of the touch sensor 410. The user input acquired through the first region 412-1 may be an input which is dragged from a first point in the first region 412-1 to a second point different from the first point. When the reproduced media contents are being sought, the processor 120 may display, based on the user input, a thumbnail image corresponding to reproduction timing of the media contents on the auxiliary display 360. When the user input is released, the processor 120 may reproduce media contents at a reproduction timing corresponding to the second point.

In an embodiment, the processor 120 may display, on the auxiliary display 360, a progress bar 1011 indicating the reproduction timing of the media contents.

In an embodiment, the processor 120 may perform, as the first function, adjusting 1002 of the volume of the reproduced media contents or adjusting 1003 of the brightness thereof, based on a user input acquired through the first region 412-1 of the touch sensor 410. For example, when the user input is released at the second point, the media contents may be reproduced with volume or brightness corresponding to the second point.

In an embodiment, the processor 120 may reproduce 1004 media contents following the reproduced media contents, based on a user input acquired through the second region 412-2 different from the first region 412-1 of the touch input region 412. The user input acquired in the second region 412-2 may be an input which taps one point in the second region 412-2. In an embodiment, the processor 120 may display a visual object 1014 indicating the following contents reproduction 1004 on the auxiliary display 360.

In an embodiment, the processor 120 may fast-forward 1005 the reproduced media contents for a designated time, based on a user input acquired in the second region 412-2 different from the first region 412-1 of the touch input region 412. The user input acquired in the second region 412-2 may be an input which double taps one point in the second region 412-2. In an embodiment, the processor 120 may display, on the auxiliary display 360, a visual object 1015 indicating that the reproduced media contents are fast-forwarded 1005.

In an embodiment, the first region 412-1 and the second region 412-2 may different from each other. For example, at least a portion of the second region 412-2 may be included in the first region 412-1. For example, at least a portion of the second region 412-2 may overlap the first region 412-1.

In an embodiment, the tent mode in FIG. 8 may be referred to as "first mode".

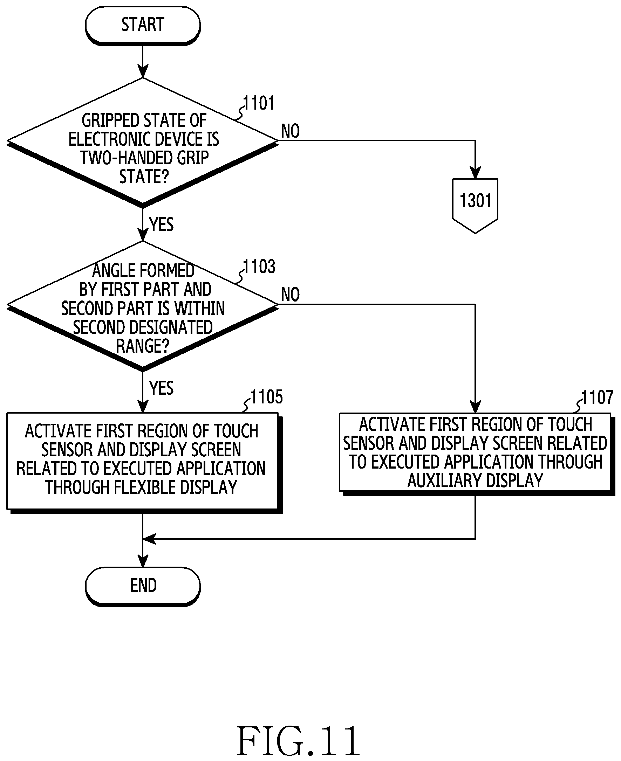

FIG. 11 is a flowchart showing a method for configuring an activation region of a touch sensor, based on the state of an electronic device 101 according to an embodiment.

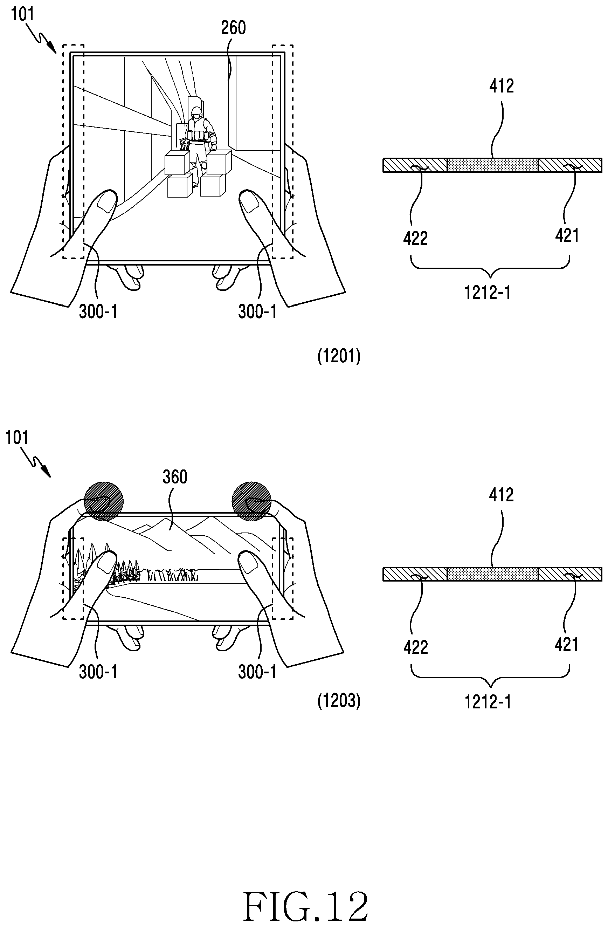

FIG. 12 illustrates an example in which an electronic device 101 according to an embodiment activates a first region of a touch sensor and operates.

Referring to FIG. 11, in operation 1101, the electronic device 101 may identify whether a gripped state is a two-handed grip state. Operation 1101 may correspond to operation 503 in FIG. 5. For example, the processor 120 may use the sensor unit 420 to identify that a user's body touches at least a portion of the first side region 300-1 of the first part 301 and at least a portion of the second side region 300-2. The processor 120 may identify, in response to the identification, that the gripped state of the electronic device 101 is a "two-handed grip state".

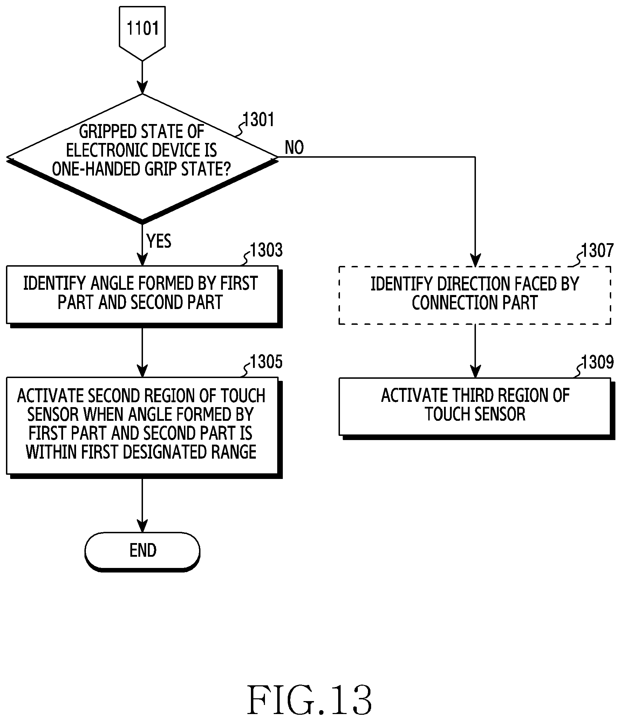

In an embodiment, when the processor 120 identifies, in operation 1101, that the gripped state of the electronic device 101 is the "two-handed grip state", the processor 120 may perform operation 1103. Otherwise, the processor 120 may perform operation 1301 in FIG. 13.

In operation 1103, when it is identified that the gripped state of the electronic device 101 is the two-handed grip state, the electronic device 101 may identify whether the angle θ 305 formed by the first part 301 and the second part 302 is within a second designated range. Operation 1103 may correspond to operation 501 in FIG. 5. For example, the processor 120 may identify, based on a value acquired by the sensor unit 420, the angle θ 305 formed by the first part 301 and the second part 302. In an embodiment, when an angle formed by the first part 301 and the second part 302 is within the second designated range, the angle formed by the first part 301 and the second part 302 may be an obtuse angle, and the second designated range may be 90° to 180°. When it is determined, in operation 1103, that the angle formed by the first part 301 and the second part 302 is within the second designated range, operation 1105 may be performed. Otherwise, operation 1107 may be performed.

In operation 1105, the electronic device 101 may activate a first region of the touch sensor 410, and may display a screen related to an executed application through the flexible display 260. For example, referring to reference numeral 1201 in FIG. 12, the processor 120 may activate a first region 1212-1 of the touch input region 412, and may deactivate a region of the touch input region 412, which is not included in the first region 1212-1. The touch sensor 410 may acquire a user input through the first region 1212-1, may generate a value based on the acquired user input, and may transfer the value to the processor 120. The processor 120 may process the value based on the user input acquired through the first region 1212-1 to identify the position of the user input, a period during which the user input is maintained, or the pressure (or strength) of the user input. The touch sensor 410 may not generate a value based on a user input acquired through a region other than the first region 1212-1 in the touch input region 412, or may not provide the value to the processor 120. The processor 120 may not process a value based on a user input acquired through the touch input region 412 other than the first region 1212-1. In an embodiment, in operation 1105, the processor 120 may activate the flexible display 260, and may deactivate the auxiliary display 360. In an embodiment, the processor 120 may display a screen related to an executed application through the entire region of the flexible display 260.

In an embodiment, the first region 1212-1 of the touch input region 412 may include a region 421 and a region 422. In an embodiment, the region 421 and the region 422 may correspond to the first side region 300-1 and the second side region 300-2, respectively. For example, as the first side region 300-1 and the second side region 300-2 are formed to be opposite to each other in the housing 300, the region 421 and the region 422 may be formed to be opposite to each other in the touch input region 412. For example, the region 421 may be formed to be closer to the first side region 300-1 than to the second side region 300-2, and the region 422 may be formed to be closer to the second side region 300-2 than to the first side region 300-1.

In operation 1107, the electronic device 101 may activate the first region of the touch sensor 410, and may display a screen related to a currently executed application through the auxiliary display 360. For example, referring to reference numeral 1203 in FIG. 12, the processor 120 may activate the first region 1212-1 of the touch input region 412 and may deactivate the touch input region 412 which is not included in the first region 1212-1. The touch sensor 410 may acquire a user input through the first region 1212-1, may generate a value based on the acquired user input, and may transfer the value to the processor 120. The processor 120 may process the value based on the user input acquired through the first region 1212-1 to identify the position of the user input, the strength thereof, and a time during which the user input is maintained. The touch sensor 410 may not generate a value based on a user input acquired through the touch input region 412 other than the first region 1212-1, or may not provide the value to the processor 120. The processor 120 may not process a value based on a user input acquired through the touch input region 412 other than the first region 1212-1. In an embodiment, in operation 1107, the processor 120 may activate the auxiliary display 360 and may deactivate the flexible display 260. In an embodiment, the processor 120 may display a screen related to a currently executed application through the auxiliary display 260.

FIG. 13 is a flowchart showing a method for configuring an activation region of a touch sensor, based on the state of an electronic device 101 according to an embodiment.

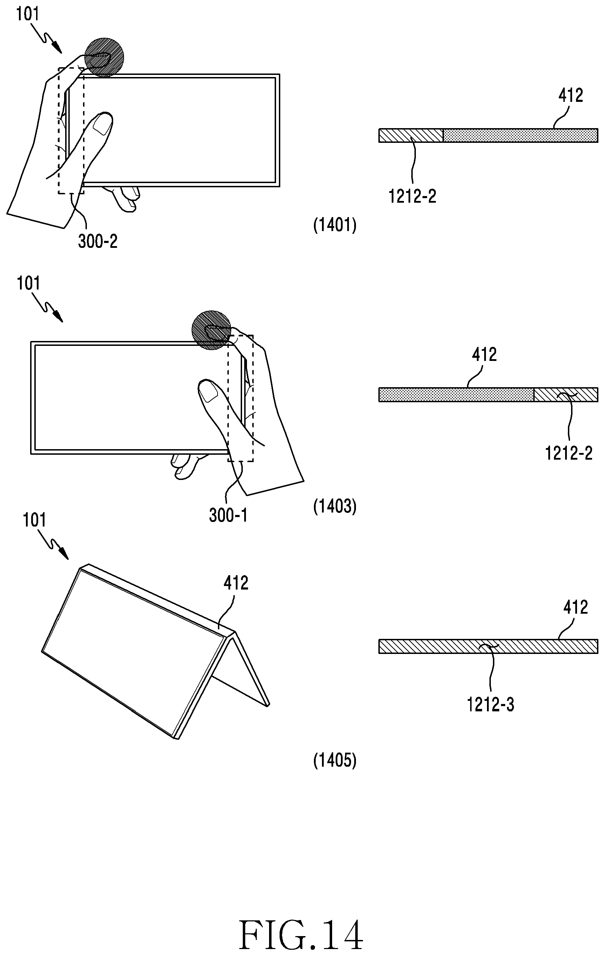

FIG. 14 illustrates an example in which an electronic device according to an embodiment activates a second region of a touch sensor and operates and an example in which the electronic device activates a third region of the touch sensor and operates.

Referring to FIG. 13, when it is determined, in operation 1101 in FIG. 11, that the gripped state of the electronic device 101 is not the two-handed grip state, operation 1301 may be performed.

In operation 1301, the electronic device 101 may determine whether the gripped state of the electronic device 101 is a one-handed grip state. In operation 1301, the processor 120 may perform the same operation as an operation in which the processor 120 identifies the gripped state of the electronic device 101 in operation 503 in FIG. 5. For example, the processor 120 may use the sensor unit 420 to identify that a user's body touches at least a portion of the first side region 300-1 of the first part 301 or at least a portion of the second side region 300-2, and at least a portion of the second side region 300-2 or at least a portion of the first side region 300-1 do not touch the user's body. In response to the identification, the processor 120 may identify that the gripped state of the electronic device 101 is a "one-handed grip state".

In an embodiment, when the processor 120 identifies, in operation 1301, that the gripped state of the electronic device 101 is the "one-handed grip state", the operation 1303 may be performed. Otherwise, operation 1309 may be performed.

In operation 1303, the electronic device 101 may identify an angle formed by the first part 301 and the second part 302. Operation 1303 may correspond to operation 501 in FIG. 5. For example, the processor 120 may identify, based on a value acquired by the sensor unit 420, the angle θ 305 formed by the first part 301 and the second part 302.

In operation 1305, when the angle formed by the first part 301 and the second part 302 is within a first designated range, the electronic device 101 may activate of a second region of the touch sensor 410. For example, referring to reference numerals 1401 and 1403 in FIG. 14, the processor 120 may activate a second region 1212-2 of the touch input region 412, and may deactivate a region of the touch input region 412, which is not included in the second region 1212-2. The touch sensor 410 may acquire a user input through the second region 1212-2, may generate a value based on the acquired user input, and may transfer the value to the processor 120. The processor 120 may process the value based on the user input acquired through the second region 1212-2 to identify the position of the user input in the second region 1212-2, the strength of the user input, and a time during which the user input is maintained. The touch sensor 410 may not generate a value based on a user input acquired through a region of the touch input region 412 other than the second region 1212-2, or may not provide the value to the processor 120. The processor 120 may not process a value based on a user input acquired through a region of the touch input region 412 other than the second region 1212-2.

In an embodiment, when an angle formed by the first part 301 and the second part 302 is within the first designated range, the angle formed by the first part 301 and the second part 302 may be an acute angle, and the first designated range may be 0° to 90°.

In operation 1309, when it is identified that the gripped state of the electronic device 101 is not the one-handed grip state, the electronic device 101 may activate a third region of the touch sensor 410. For example, referring to reference numeral 1405 in FIG. 14, the processor 120 may activate a third region 1212-3 of the touch input region 412. The touch sensor 410 may acquire a user input through the third region 1212-3, may generate a value based on the acquired user input, and may transfer the value to the processor 120. The processor 120 may process the value based on the user input acquired through the third region 1212-3 to identify the position, pressure, and duration of the acquired user input.

In an embodiment, the third region 1212-3 may include at least a portion of the first region 1212-1 and at least a portion of the second region 1212-2.

In an embodiment, the electronic device 101 may also perform operation 1307 before performing operation 1309. Operation 1307 may correspond to operation 803 in FIG. 8. For example, the processor 120 may identify that a direction faced by the connection part 303 is a direction opposite to a gravity direction G, and may perform operation 1309 in response to the identification.

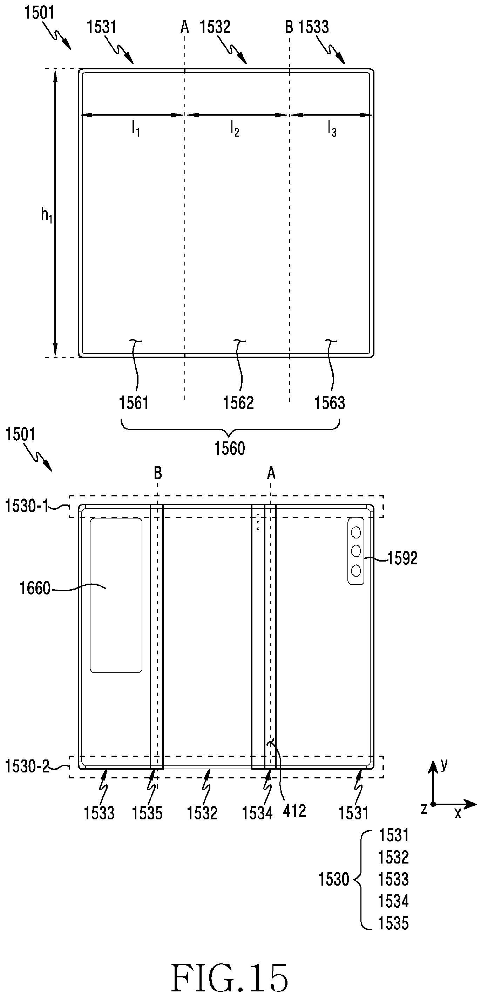

FIG. 15 illustrates a state in which an electronic device 1501 according to another embodiment is unfolded. In an embodiment, the electronic device 1501 may include at least one of the elements illustrated in FIG. 1.

In embodiments below, a surface on which a flexible display 1560 is disposed while the electronic device 1501 is unfolded is defined as a front surface of the electronic device 1501, and a surface opposite to the front surface is defined as a rear surface of the electronic device 1501.

Referring to FIG. 15, the electronic device 1501 according to an embodiment may include a housing 1530, the flexible display 1560 (e.g., the display device 160 in FIG. 1), and an auxiliary display 1660 (e.g., the display device 160 in FIG. 1).

In an embodiment, the housing 1530 may include a first part 1531, a second part 1532, a third part 1533, a first connection part 1534, and a second connection part 1535.

In an embodiment, the first part 1531 may be connected to the first connection part 1534. In an embodiment, the first part 1531 may be connected to the second part 1532 by the first connection part 1534. In an embodiment, each of the first part 1531 and the second part 1532 may rotate about the first connection part 1534.

In an embodiment, the second part 1532 may be connected to the second connection part 1535. In an embodiment, the second part 1532 may be connected to the third part 1533 by the second connection part 1535. In an embodiment, each of the second part 1532 and the third part 1533 may rotate about the second connection part 1535.

The housing 1530 according to an embodiment may be a foldable housing including the first part 1531, the second part 1532, and the third part 1533, which are foldable.

In an embodiment, the first connection part 1534 may be coupled to the first part 1531 and the second part 1532. In an embodiment, the second connection part 1535 may be connected to the second part 1532 and the third part 1533. In an embodiment, the housing 1530 may be folded with reference to the first connection part 1534 and the second connection part 1535. In an embodiment, the first connection part 1533 and the second connection part 1534 may include a hinge structure enabling a folding operation of the housing 1530. In another embodiment, the first connection part 1533 and the second connection part 1534 may include a multi-joint structure enabling the folding operation of the housing 1530. However, a mechanism in which the first connection part 1533 and the second connection part 1534 are applied for the folding operation of the housing 1530 is not limited to one method, and various mechanisms usable by those skilled in the art, in addition to the above-mentioned methods, may be applied.

In an embodiment, while the electronic device 1501 is completely unfolded, at least a portion of the first connection part 1534 may be covered by the first part 1501 and the second part 1502, and thus may not be exposed outside. The extent to which the first connection part 1534 is exposed outside may vary depending on an angle by which the first part 1531 and the second part 1532 are folded. For example, the region of the first connection part 1534 may be exposed more while the first part 1531 and the second part 1532 are folded than while the first part 1531 and the second part 1532 are unfolded.

In an embodiment, the first part 1531, the second part 1532, and the third part 1533 may be formed as multiple elements coupled to each other, like the first rear cover 312 and the housing structure 310 of the first part 301 illustrated in FIG. 2, or may be integrally formed differently therefrom.

In an embodiment, the first part 1531 may include a rear region 1592 in which various components are disposed. In an embodiment, the rear region 1592 may be formed on a surface opposite to the flexible display 1560 at the first part 1531. In an embodiment, at least one component or sensor may be visually exposed through the rear region 1592. In an embodiment, the sensor may include a proximity sensor and/or a rear camera.

In an embodiment, longitudinal (e.g., y-axial) lengths of the first part 1531, the second part 1532, and the third part 1533 may be substantially equal to each other. For example, each of the first part 1531, the second part 1532, and the third part 1533 may have a longitudinal length h1.

In an embodiment, the transverse (e.g., x-axial) length of the first part 1531 may be substantially equal to the transverse length of the second part 1532. For example, the transverse length l1 of the first part 1531 may be substantially equal to the transverse length l2 of the second part 1532.

In an embodiment, the transverse length of the second part 1532 may be different from the transverse length of the third part 1533. For example, the transverse length l2 of the second part 1532 may be longer than the transverse length l3 of the third part 1533.

In an embodiment, at least a portion of the flexible display 1560 may be received and disposed in a space formed by the housing 1530. In an embodiment, the flexible display 1560 may form most of the front surface of the electronic device 1501. That is, most of the front surface of the electronic device 1501 may be formed by the flexible display 1560, and the rest of the front surface may be formed by the housing 1530.

In an embodiment, the flexible display 1560 may be bent so as to correspond to an operation in which the first part 1531, the second part 1532, and the third part 1533 are folded or rotated.

In an embodiment, the flexible display 1560 may include a first region 1561, a second region 1562, and a third region 1563. In an embodiment, the first region 1561 may correspond to the first part 1531. For example, the first region 1561 may be a region in which the flexible display 1560 overlaps the first part 1531. In an embodiment, the second region 1562 may correspond to the second part 1532. For example, the second region 1562 may be a region in which the flexible display 1560 overlaps the second part 1532. In an embodiment, the third region 1563 may correspond to the third part 1533. For example, the third region 1563 may be a region in which the flexible display 1560 overlaps the third part 1533. In an embodiment, the transverse length of the third region 1563 may be shorter than the transverse length of each of the first region 1561 and the second region 1562.

In an embodiment, at least a portion of the auxiliary display 1660 may be received and disposed in a space formed in the third part 1533. The auxiliary display 1660 may be disposed on the rear surface of the third part 1533 to form at least a portion of the rear surface. In another embodiment, the auxiliary display 1660 may be omitted. In this case, the rear surface of the third part 1533 may be formed of a substantially opaque plate containing metal and/or polymer.

In an embodiment, the electronic device 1501 may include the elements included in the electronic device 101 in FIG. 4A. For example, the electronic device 1501 may include the touch sensor 410, the sensor unit 420, the haptic module 430, and the processor 120 operatively coupled to the touch sensor 410, the sensor unit 420, and the haptic module 430.

In an embodiment, the touch sensor 410 may be disposed in the first connection part 1534 or on the first connection part 1534. The touch sensor 410 may acquire a user input through a touch input region 412 formed at the first connection part 1534. In relation to examples in which the touch input region 412 is disposed at the first connection part 1534, the examples in which the touch input region 412 is disposed at the connection part 303, illustrated in FIG. 4B, may be identically applied.

In an embodiment, the sensor unit 420 may be disposed in the first part 1531, the second part 1532, or the third part 1533. The sensor unit 420 may include multiple sensors different from the touch sensor 410, and thus may be disposed in at least one among the first part 1531, the second part 1532, and the third part 1533.

In an embodiment, the sensor unit 420 may sense a state in which the electronic device 1501 is folded. The processor 120 may identify, through the sensor unit 420, an angle by which the first part 1531 and the second part 1532 are folded and an angle by which the second part 1532 and the third part 1533 are folded.

In an embodiment, the sensor unit 420 may sense a state regarding the posture of the electronic device 1501. For example, the sensor unit 420 may sense a state regarding a direction faced by the first connection part 1534. The processor 120 may use the sensor unit 420 to identify whether the first connection part 1534 faces a gravity direction or faces a direction opposite to the gravity direction.

In an embodiment, the sensor unit 420 may sense a state in which the electronic device 1501 is gripped by a user. For example, the sensor unit 420 may sense a state in which a first side region 1530-1 and/or a second side region 1530-2 of the housing 1530 are gripped by the user. The processor 120 may identify, based on a state (or a value based on the state) sensed by the sensor unit 420, whether the electronic device 1501 has been gripped with two hands of the user or gripped with one hand of the user, and when the electronic device 1501 has been gripped with one hand of the user, may identify whether the user has gripped the electronic device 1501 with the left hand or with the right hand. In an embodiment, when it is identified that at least a portion of the first side region 1530-1 and at least a portion of the second side region 1530-2 have been gripped by the user, the processor 120 may determine that the gripped state of the electronic device 1501 is a "two-handed grip state". In an embodiment, when it is identified that at least a portion of the first side region 1530-1 or at least a portion of the second side region 1530-2 has been gripped by the user, the processor 120 may determine that the gripped state of the electronic device 1501 is a "one-handed grip state".

In an embodiment, the haptic module 430 may be disposed in at least one among the first part 1531, the second part 1532, and the third part 1533. The haptic module 430 may produce a vibration or haptic effect according to a touch position and/or a touch pressure of an external object, sensed by the touch sensor 410. The haptic module 430 may produce a vibration or haptic effect with different intensities depending on the magnitude of pressure. For example, the haptic module 430 may produce a vibration or haptic effect having a higher intensity as the pressure of an external object is higher.

In an embodiment, when an angle formed by the first part 1531 and the second part 1532 is within a designated angle range, the processor 120 may determine a current operation mode of the electronic device 1501 among multiple operation modes supported by the electronic device 1501. For example, when an angle formed by the first part 1531 and the second part 1532 is an acute angle, the processor 120 may determine that a first mode among the operation modes of the electronic device 1501 is a current operation mode of the electronic device 1501, and may operate the electronic device 1501 in the first mode. When the determined operation mode is the first mode, the processor 120 may perform a first function, based on a user input made through a first region of the touch sensor 410. When the determined operation mode is a second mode, the processor 120 may perform a second function different from the first function, based on a user input made through the first region of the touch sensor 410.

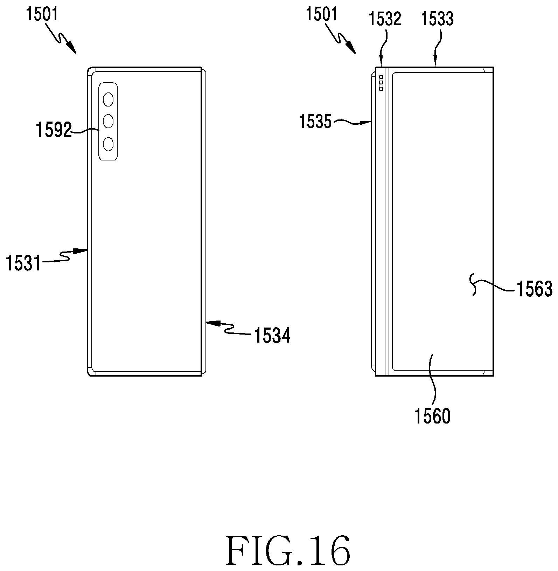

FIG. 16 illustrates a state in which an electronic device 1501 according to another embodiment is completely folded.

Referring to FIG. 16, when the electronic device 1501 according to an embodiment is seen from a first direction while the electronic device 1501 is completely folded, the first part 1531 and the first connection part 1534 may be viewed. The first part 1531 may have substantially the same transverse length as the second part 1532, and thus the second part 1532 may be covered by the first part 1531 while the electronic device 1501 is completely folded.

While the electronic device 1501 according to an embodiment is completely folded, when the electronic device 1501 is seen from a second direction opposite to the first direction, the second part 1532, the third part 1533, and the second connection part 1535 may be viewed. In this case, the third part 1533 may have a shorter transverse length than the second part 1532, and thus even when the electronic device 1501 is completely folded, a portion of the second part 1532 may be viewed from outside.

In an embodiment, even when the electronic device 1501 is completely folded, the third region 1563 of the flexible display 1560 may be viewed from outside.

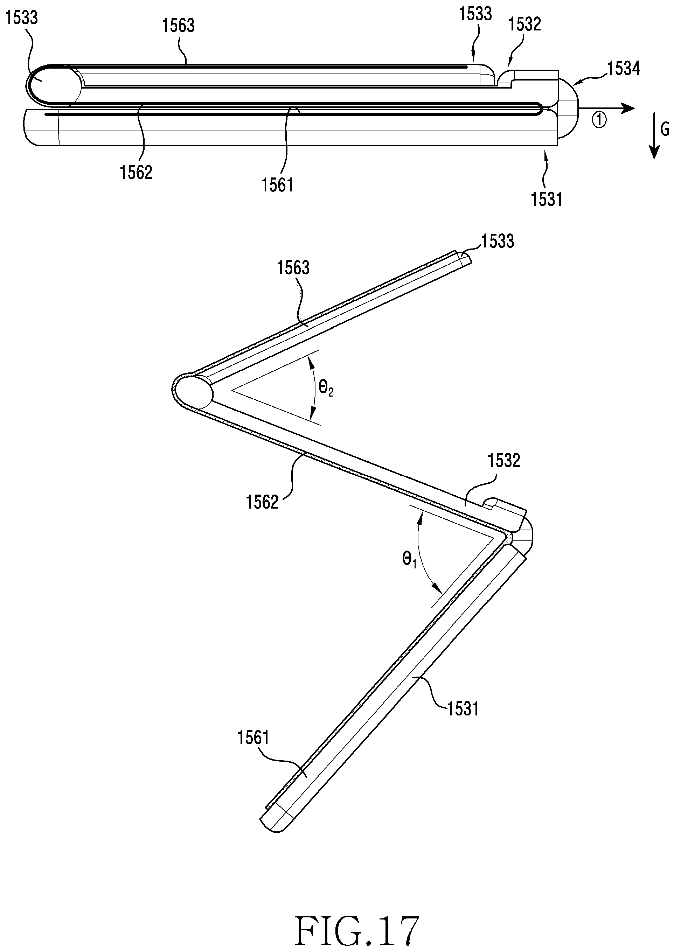

FIG. 17 illustrates a state in which an electronic device 1501 according to another embodiment is folded.

Referring to FIG. 17, a direction in which the first part 1531 and the second part 1532 are folded may be different from a direction in which the second part 1532 and the third part 1533 are folded. For example, the first part 1531 and the second part 1532 may be folded in a direction in which the flexible displays 1560 face each other, and the second part 1532 and the third part 1533 may be folded in a direction in which the rear surface of the second part 1532 and the rear surface of the third part 1533 face each other.

In an embodiment, the processor 120 may identify, based on a value acquired by the sensor unit 420, an angle θ1 formed by the first part 1531 and the second part 1532.

In an embodiment, the processor 120 may identify, based on a value acquired by the sensor unit 420, an angle θ2 formed by the second part 1532 and the third part 1533.

In an embodiment, the processor 120 may identify, based on a value acquired by the sensor unit 420, a direction (e.g., direction ①) faced by the first connection part 1534. The processor 120 may determine, based on the identification, whether a direction faced by the first connection part 1534 is a gravity direction g or a direction opposite to the gravity direction.

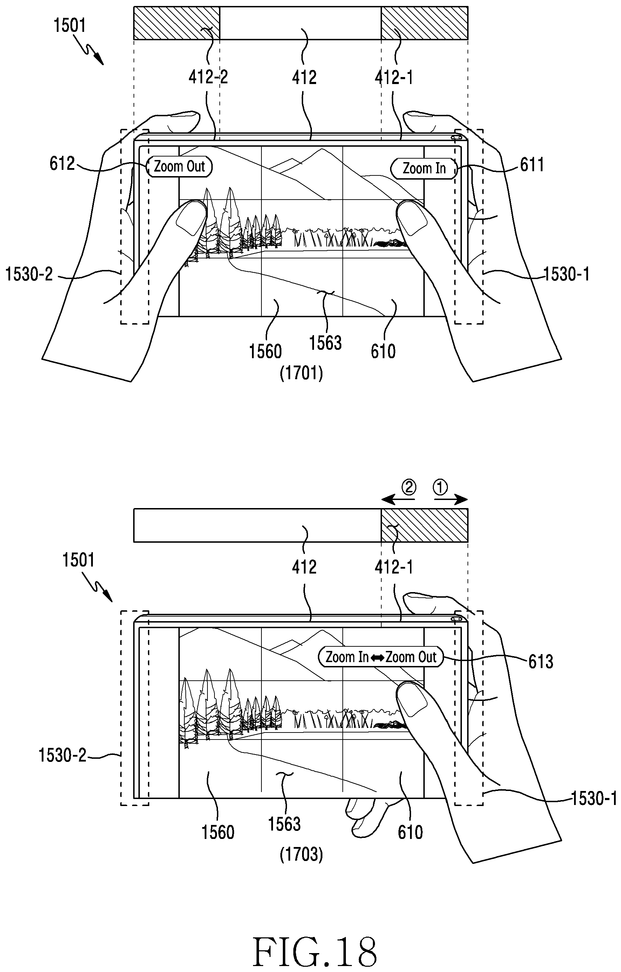

FIG. 18 illustrates examples in which an electronic device 1501 according to another embodiment operates in a first folding mode and a second folding mode.

Reference numeral 1701 in FIG. 18 illustrates an example in which the electronic device 1501 operates in a first folding mode. In an embodiment, the processor 120 may identify an angle formed by the first part 1531 and the second part 1532, and may identify a gripped state of the electronic device 1501 when the identified angle is within a first designated range. The processor 120 may determine whether the gripped state of the electronic device 1501 is a two-handed grip state or a one-handed grip state. In an embodiment, when the angle formed by the first part 1531 and the second part 1532 is identified to be within the first designated angle range and when the gripped state of the electronic device 1501 is determined to be a two-handed grip state, the processor 120 may operate the electronic device 1501 in the first folding mode.

Referring to reference numeral 1701, when the electronic device 1501 operates in the first folding mode, the processor 120 may perform a first function, based on a user input acquired through a first region 412-1 of the touch input region 412.

When compared with the example, illustrated in reference numeral 601 in FIG. 6, in which the electronic device 101 operates in the first folding mode, the example in which the electronic device 1501 operates in the first folding mode in reference numeral 1701 is different only in that displaying is performed through the third region 1563 of the flexible display 1560 other than the auxiliary display 360. Therefore, a redundant description will be omitted.

Reference numeral 1703 in FIG. 18 illustrates an example in which the electronic device 1501 operates in a second folding mode. In an embodiment, the when the angle formed by the first part 1531 and the second part 1532 is identified to be within the first designated angle range and when the gripped state of the electronic device 1501 is determined to be a one-handed grip state, the processor 120 may operate the electronic device 1501 in the second folding mode.

Referring to reference numeral 1703, when the electronic device 1501 operates in the second folding mode, the processor 120 may perform a second function different from the first function of the first folding mode, , based on a user input acquired through the first region 412-1 of the touch input region 412.

When compared with the example, illustrated in reference numeral 603 in FIG. 6, in which the electronic device 101 operates in the second folding mode, the example in which the electronic device 1501 operates in the second folding mode in reference numeral 1703 is different only in that displaying is performed through the third region 1563 of the flexible display 1560 other than the auxiliary display 360. Therefore, a redundant description will be omitted.

Like the electronic device 101, the electronic device 1501 according to an embodiment may perform the operations illustrated in FIG. 5.

In operation 501, the processor 120 of the electronic device 1501 may identify, based on a value acquired by the sensor unit 420, an angle formed by the first part 1531 and the second part 1532.

In operation 503, when the angle formed by the first part 1531 and the second part 1532 is within a first designated angle range, the processor 120 of the electronic device 1501 may identify a gripped state of the electronic device 1501, based on a value acquired by the sensor unit 420. The first designated angle range may be 0° to 90°.

In operation 505, the processor 120 of the electronic device 1501 may determine whether the gripped state of the electronic device 1501 is a one-handed grip state or a two-handed grip state. In operation 505, when the processor 120 determines that the gripped state of the electronic device 1501 is the two-handed grip state, operation 507 may be performed, and when the processor 120 determines that the gripped state of the electronic device 1501 is the one-handed grip state, operation 509 may be performed.

In operation 507, the electronic device 1501 may operate in a first folding mode. The processor 120 may operate the electronic device 1501 in the first folding mode.

In operation 509, the electronic device 1501 may operate in a second folding mode. The processor 120 may operate the electronic device 1501 in the second folding mode.

In an embodiment, the first folding mode in FIG. 18 may be referred to as "first mode", and the second folding mode in FIG. 18 may be referred to as "second mode".

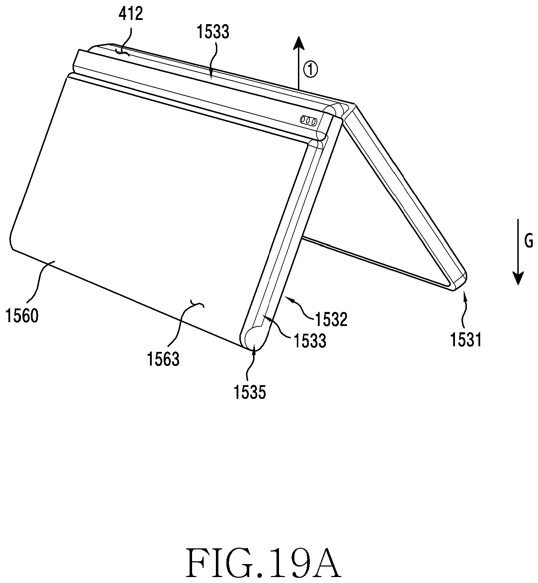

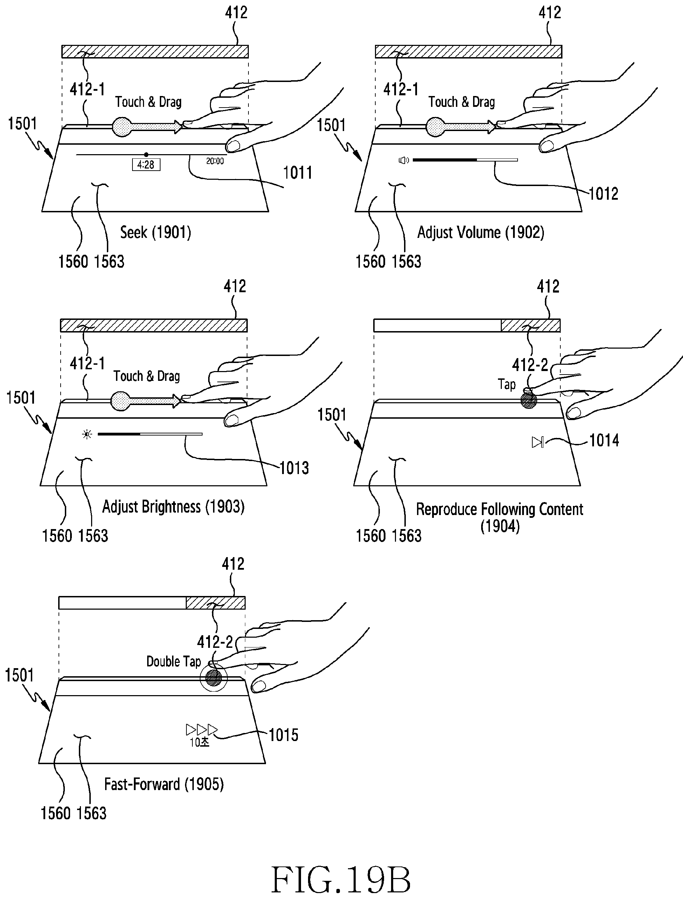

FIGS. 19A and 19B illustrate an example in which an electronic device 1501 according to another embodiment operates in a tent mode.

Referring to FIG. 19A, the electronic device 1501 may operate in a tent mode. For example, the processor 120 of the electronic device 1501 may identify, based on a value acquired by the sensor unit 420, an angle θ1 formed by the first part 1531 and the second part 1532. The processor 120 may determine, based on the identification, that the angle θ1 formed by the first part 1531 and the second part 1532 is within a first designated angle range. In response to the determination, the processor 120 may identify, based on a value acquired by the sensor unit 420, a direction (e.g., direction ①) faced by the first connection part 1534. The processor 120 may determine whether the direction faced by the first connection part 1534 is a direction opposite to gravity direction G.

In an embodiment, when the processor 120 identifies that the angle formed the first part 1531 and the second part 1532 is within the first designated angle range, and determines that the direction faced by the first connection part 1534 is a direction opposite to the gravity direction, the processor 120 may operate the electronic device 1501 in a tent mode. The first designated angle range may be 0° to 90°.

Referring to FIG. 19B, while the electronic device 1501 operates in a tent mode, functions of seeking 1901, volume adjustment 1902, brightness adjustment 1903, following content reproduction 1904, and fast-forwarding 1905 of a currently reproduced content may be performed based on a user input acquired through the touch input region 412.

In an embodiment, when compared with the examples, illustrated in FIG. 10, in which the electronic device 101 operates in the tent mode, examples in which the electronic device 1501 operates in the tent mode is different only in that displaying is performed through the third region 1563 of the flexible display 1560 other than the auxiliary display 360. Therefore, a redundant description will be omitted.

Like the electronic device 101, the electronic device 1501 according to an embodiment may perform the operations illustrated in FIG. 8.

In operation 801, the processor 120 of the electronic device 1501 may use the sensor unit 420 to identify an angle formed by the first part 1531 and the second part 1532.

In operation 803, the processor 120 of the electronic device 1501 may use the sensor unit 420 to identify a direction faced by the first connection part 1534. In another embodiment, operation 803 may be omitted.

If operation 803 was performed, in operation 805, the processor 120 may operate the electronic device 1501 in the tent mode when the angle formed by the first part 1531 and the second part 1532 is within a first designated angle range and when the first connection part 1534 faces a direction opposite to a gravity direction.

If operation 803 was omitted, in operation 805, the processor 120 may operate the electronic device 1501 in the tent mode when it is identified that the angle formed by the first part 1531 and the second part 1532 is within the first designated angle range.

In an embodiment, the tent mode in FIG. 19 may be referred to as "first mode".

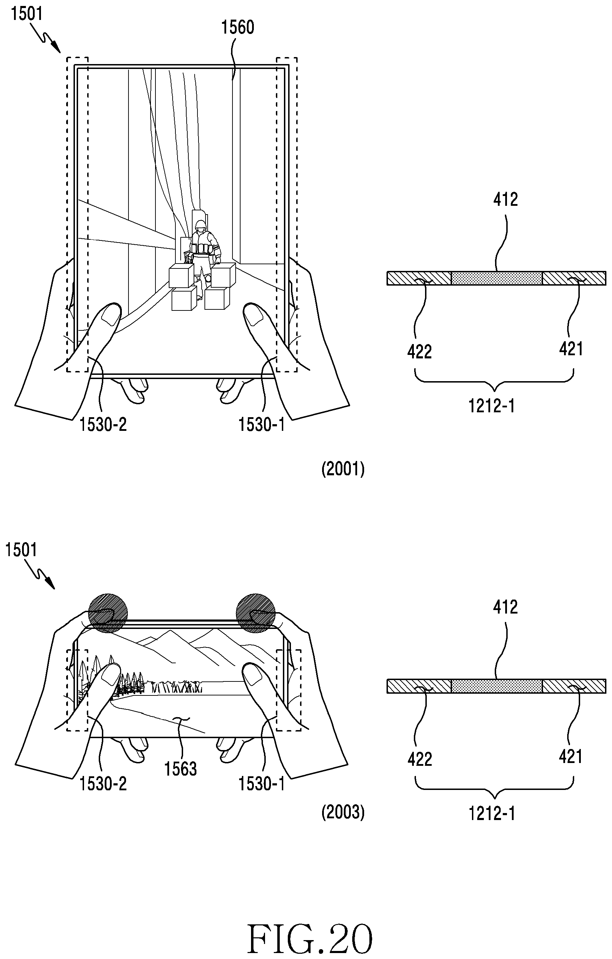

FIG. 20 illustrates an example in which an electronic device 1501 according to another embodiment activates a first region of a touch input region and operates.

Referring to reference numeral 2001 in FIG. 20, the electronic device 1501 may activate a first region of the touch sensor 410, and may display a screen related to an executed application through the entire region of the flexible display 1560. For example, the processor 120 may activate the first region 1212-1 of the touch input region 412, and may deactivate a region, other than the first region 1212-1, in the touch input region 412. The processor 120 may detect, through the touch sensor 410, a position and/or pressure of a user input acquired in the activated first region 1212-1. The processor 120 may not process a user input acquired in the deactivated region of the touch input region 412. For example, the touch sensor 410 may not provide information about a user input acquired in the deactivated region to the processor 120. In an embodiment, while the first region 1212-1 of the touch sensor 410 is activated, the processor 120 may display a screen related to a currently executed application through the entire region of the flexible display 1560. In another embodiment, the processor 120 may also display a screen related to a currently executed application through the first region 1561 and the second region 1562 of the flexible display 1560. Depending on the angle θ2 formed by the second part 1532 and the third part 1533, the third region 1563 of the flexible display 1560 may be viewed or may not be viewed from a direction in which a user looks at the electronic device 1501. For example, when the angle θ2 formed by the second part 1562 and the third part 1563 is 0° (when completely folded), the third region 1563 may not be viewed by the user. In an embodiment, the processor 120 may identify the angle θ2 formed by the second part 1532 and the third part 1533, and may determine whether the angle θ2 is within a first designated range. When it is determined that the angle θ2 formed by the second part 1532 and the third part 1533 is within the first designated range, the processor 120 may deactivate the third region 1563 of the flexible display 1560, and may display an execution screen of an application through the first region 1561 and the second region 1562.

Referring to reference numeral 2003 in FIG.20, the electronic device 1501 may activate the first region 1212-1 of the touch sensor 410, and may display a screen related to a currently executed application through the third region 1563 of the flexible display 1560. For example, the processor 120 may activate the first region 1212-1 of the touch input region 412, and may detect a position and/or pressure of a user input acquired through the first region 1212-1. The processor 120 may delay processing a user input acquired in a region, other than the first region 1212-1, in the touch input region 412, or may control the touch sensor 410 not to provide, to the processor, data on a user input acquired in a deactivated region of the touch input region 412. In an embodiment, the processor 120 may display a screen related to a currently executed application (or an execution screen of the application) through the third region 1563 of the flexible display 1560. The processor 120 may control a currently executed application, based on a user input acquired through based on the activated region 1212-1.

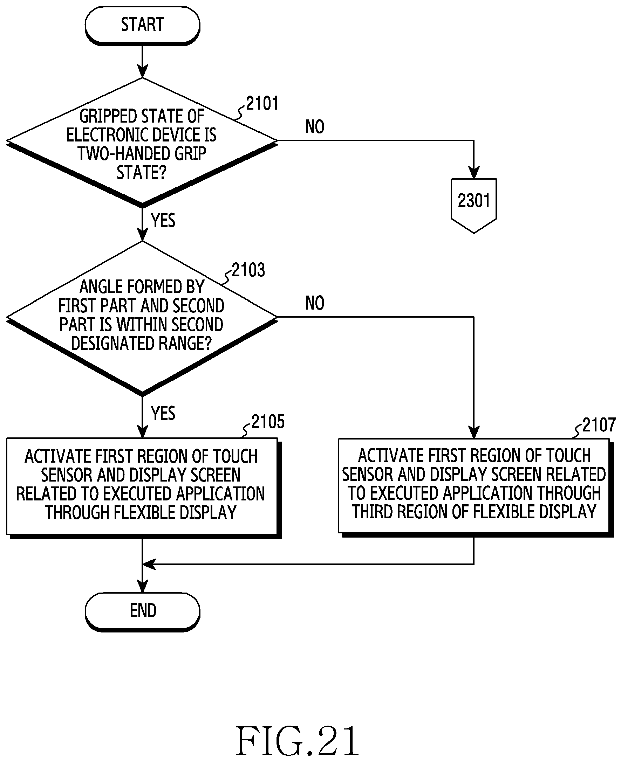

FIG. 21 is a flowchart showing a method for configuring an activation region of a touch sensor 410, based on the state of an electronic device 1501 according to another embodiment.

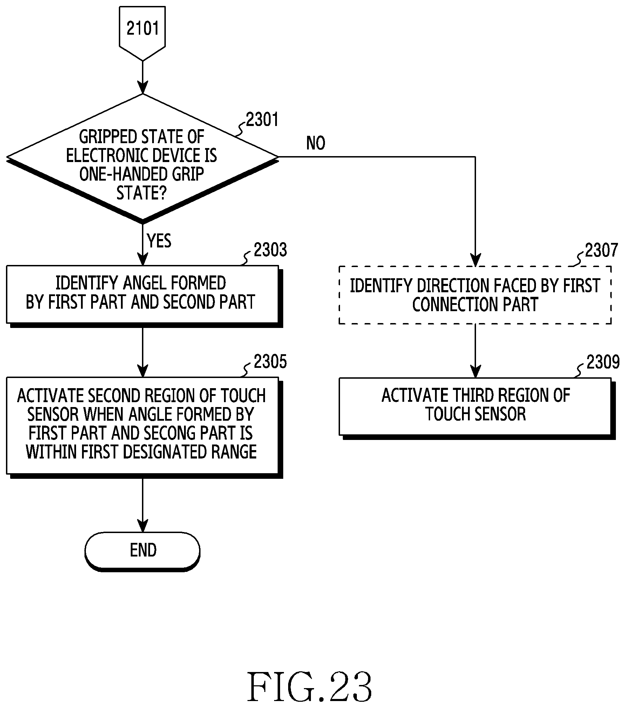

Referring to FIG. 21, in operation 2101, the electronic device 1501 may determine whether a gripped state of the electronic device 1501 is a two-handed grip state. For example, the processor 120 may use the sensor unit 420 to identify whether the first side region 1530-1 and/or the second side region 1530-2 touch a user's body. When it is identified that at least a portion of the first side region 1530-1 or at least a portion of the second side region 1530-2 has touched the user's body, the processor 120 may determine that the gripped state of the electronic device 1501 is a one-handed grip state. When it is identified that at least a portion of the first side region 1530-1 and at least a portion of the second side region 1530-2 has touched the user's body, the processor 120 may determine that the gripped of the electronic device 1501 is a two-handed grip state. When the processor 120 determines that the gripped state of the electronic device 1501 is the two-handed grip state, operation 2103 may be performed. Otherwise, operation 2301 in FIG. 23 may be performed.

In operation 2103, the electronic device 1501 may determine whether an angle θ1 formed by the first part 1501 and the second part 1502 is within a second designated range. For example, the sensor unit 420 may sense a state in which the first part 1501 and the second part 1502 are folded, and may generate a value corresponding to the sensed state. The sensor unit 420 may provide the generated value to the processor 120. The processor 120 may identify the angle θ1, based on the value acquired by the sensor unit 420. The processor 120 may determine, based on the identification, whether the angle θ1 is within the second designated range. In an embodiment, the second designated range may be 90° to 180°.

In an embodiment, when the processor 120 determines that θ1 is within the second designated range, operation 2105 may be performed. Otherwise, operation 2107 may be performed.

In operation 2105, the electronic device 1501 may activate the first region 1212-1 of the touch sensor 410, and may display a screen related to a currently executed application through the flexible display 1560. For example, as illustrated in reference numeral 2001 in FIG. 20, the processor 120 may activate the first region 1212-1 of the touch input region 412, and may display a screen related to a currently executed application through the entire region of the flexible display 1560. In operation 2105, the processor 120 may identify an angle θ2 formed by the second part 1532 and the third part 1533, and may further perform determining whether the angle θ2 is within the first designated range (e.g., 0° to 90°). When it is determined that the angle θ2 formed by the second part 1532 and the third part 1533 is within the first designated range, the processor 120 may activate the first region 1212-1 of the touch input region 412, may deactivate the third region 1563 of the flexible display 1560, and may display a screen related to a currently executed application through the first region 1561 and the second region 1562. The processor 120 may control a currently executed application, based on a user input acquired through the first region 1212-1 of the touch input region 412.

In operation 2107, the electronic device 1501 may activate the first region 1212-1 of the touch sensor 410, and may display a screen related to a currently executed application through the third region 1560 of the flexible display 1560. For example, as illustrated in reference numeral 2003 in FIG. 20, the processor 120 may activate the first region 1212-1 of the touch input region 412, and may display a screen related to a currently executed application through the third region 1563 of the flexible display 1560. The processor 120 may be configured to control a currently executed application, based on a user input acquired through the first region 1212-1.

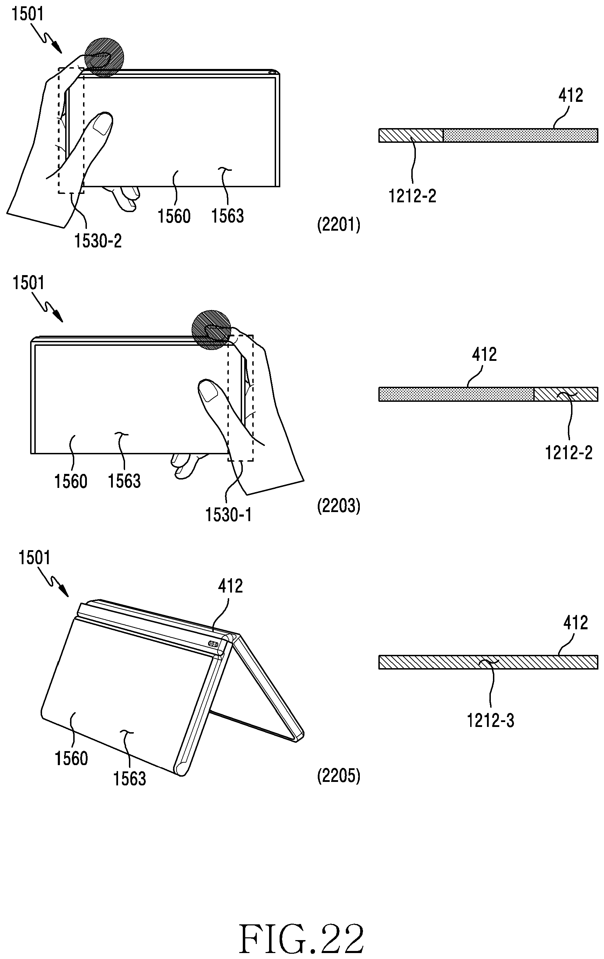

FIG. 22 illustrates an example in which an electronic device 1501 according to another embodiment activates a second region of a touch sensor and operates, and an example in which the electronic device activates a third region of the touch sensor and operates.

Referring to FIG. 22, the electronic device 1501 may activate the second region 1212-2 of the touch input region 412 (reference numerals 1401 and 1403), and may activate the third region 1212-3 (reference numeral 1405).

In FIG. 22, when compared with the examples, illustrated in FIG. 14, in which the electronic device 101 operates, examples in which the electronic device 1501 activates the second region 1212-2 or the third region 1212-3 and operates is different only in that an execution screen of the electronic device 1501 is displayed through the third region 1563 of the flexible display 1560 other than the auxiliary display 360. Therefore, a redundant description will be omitted.

FIG. 23 is a flowchart showing a method for configuring an activation region of a touch sensor 410, based on the state of an electronic device 1501 according to another embodiment.

Referring to FIG. 23, in operation 2301, the electronic device 1501 may determine whether the gripped state thereof is a one-handed grip state. For example, the processor 120 may use the sensor unit 420 to identify whether a user's body touches the first side region 1530-1 and/or the second side region 1530-2. When it is identified that the user's body has touched at least a portion of the first side region 1530-1 or at least a portion of the second side region 1530-2, the processor 120 may determine that the gripped state of the electronic device 1501 is a one-handed grip state. When it is identified that the user's body has touched at least a portion of the first side region 1530-1 and at least a portion of the second side region 1530-2, the processor 120 may determine that the gripped state of the electronic device 1501 is a two-handed grip state. When the processor 120 determine that the gripped state of the electronic device 1501 is a one-handed grip state, operation 2303 may be performed. Otherwise, operation 2307 may be performed.

In operation 2303, the electronic device 1501 may identify an angle θ1 formed by the first part 1531 and the second part 1532. For example, the sensor unit 420 may acquire a value corresponding to a state in which the first part 1531 and the second part 1532 are folded, and the processor 120 may identify the angle θ1, based on the acquired value. In another embodiment, the electronic device 1501 may further perform, in operation 2303, an operation of identifying an angle θ2 between the second part 1532 and the third part 1533.

In operation 2305, when the angle θ1 formed by the first part 1531 and the second part 1532 is within a first designated range, the electronic device 1501 may activate the second region 1212-2 of the touch sensor 410. For example, as in reference numerals 2201 and 2202 in FIG. 22, the processor 120 may activate the second region 1212-2 of the touch input region 412, and may deactivate a region of the touch input region 412, which is not included in the second region 1212-2.

In another embodiment, if the electronic device 1501 further performs an operation of identifying θ2, the electronic device 1501 may activate, in operation 2305, the second region 1212-2 of the touch sensor 410 when θ1 and θ2 are within the first designated range.

In operation 2307, the electronic device 1501 may identify a direction faced by the first connection part 1534. For example, the processor 120 may use the sensor unit 420 to identify the direction faced by the first connection part 1514. Operation 2307 may be omitted.

In operation 2309, the electronic device 1501 may activate the third region 1212-3 of the touch sensor 410. For example, when it is identified, in operation 2101, that the gripped state is not the two-handed grip state and when it is identified, operation 2301, that the gripped state is not the one-handed grip state, the processor 120 may activate the third region 1212-3 of the touch sensor 410. For example, as in reference numeral 2205 in FIG. 22, the processor 120 may activate the third region 1212-3 of the touch input region 412.

In an embodiment, if operation 2307 is performed, the processor 120 may use the sensor unit 420 to determine whether the first connection part 1534 faces a direction opposite to a gravity direction. When the first connection part 1534 faces the direction opposite to the gravity direction, the processor 120 may activate the third region 1212-3 of the touch sensor 410.

An electronic device according to various embodiments may include: a housing including multiple parts and at least one connection part configured to connect the multiple parts, respectively; a front display disposed in a space formed by the housing, and bendable according to an angle formed by the multiple parts; a touch sensor disposed in a first connection part configured to connect, to each other, a first part and a second part among the multiple parts or on the first connection part; at least one sensor different from the touch sensor and disposed in the housing; and at least one processor electrically connected to the front display, the touch sensor, and the at least one sensor, wherein the at least one processor is configured to determine, based on a value acquired by the at least one sensor, an angle formed by the first part and the second part, determine a current operation mode of the electronic device among multiple operation modes supported while the first part and the second part form an acute angle, perform, based on a user input acquired through a first region of the touch sensor, a first function when the determined operation mode is a first mode, and perform, based on a user input acquired through the first region of the touch sensor, a second function different from the first function when the determined operation mode is a second mode.

The electronic device according to an embodiment may further include an auxiliary display disposed on a surface opposite to the front display at the first part.

The electronic device according to an embodiment may further include a camera disposed on a surface opposite to the display at the second part, wherein the at least one processor is configured to display a preview image acquired by the camera on the auxiliary display, identify, based on a value acquired by the at least one sensor, a state in which the housing touches a user's body, determine the operation mode of the electronic device to be the first mode when identifying that at least a portion of a first side region of the first part and at least a portion of a second side region of the first part positioned at a side opposite to the first side region have touched the user's body, and perform zooming-in of the camera as the first function, based on the user input acquired through the first region of the touch sensor while the electronic device is in the first mode.

In an embodiment, the at least one processor may be configured to zoom out the camera, based on a user input acquired through a second region different from the first region of the touch sensor.

In an embodiment, the first region of the touch sensor may correspond to the first side region of the second part, and the second region of the touch sensor may correspond to the second side region of the second part.

In an embodiment, the electronic device may further include a camera disposed on a surface opposite to the display at the second part, wherein the at least one processor is configured to display a preview image acquired by the camera on the auxiliary display, determine the operation mode of the electronic device to be the second mode when identifying that at least a portion of a first side region of the first part touches a user's body and a second side region positioned at a side opposite to the first side region does not touch the user's body, and perform zooming-in or zooming-out of the camera as the second function, based on the user input acquired through the first region of the touch sensor corresponding to the first side region while the electronic device is in the second mode.

In an embodiment, the at least one processor may be configured to zoom in the camera when acquiring the user input swiping in a first direction through the first region of the touch sensor, and zoom out the camera when acquiring the user input swiping in a second direction opposite to the first direction through the first region of the touch sensor.

In an embodiment, the at least one processor may be configured to store an image acquired by the camera in a memory of the electronic device when a user input having a pressure exceeding a designated pressure is acquired in the first region by the touch sensor.

In an embodiment, the at least one processor may be configured to display, when the determined operation mode is the first mode, a visual object indicating the first function in a region on a display region of the auxiliary display corresponding to the first region, and display, when the determined operation mode is the second mode, a visual object indicating the second function in a region on the display region of the auxiliary display corresponding to the first region.

In an embodiment, the at least one processor may be configured to: reproduce a media content on the auxiliary display; acquire the user input, dragged from a first point of the touch sensor to a second point different from the first point, through the first region while the electronic device is in the first mode; and perform seeking of the reproduced media content as the first function, based on the acquired user input.

In an embodiment, the at least one processor may be configured to reproduce a media content following the reproduced media content when a user input is acquired through a second region different from the first region of the touch sensor, the user input acquired through the second region may be an input by which one point of the second region is tapped, and at least a portion of the second region may overlap the first region.

In an embodiment, the at least one processor may be configured to fast-forward the reproduced media content when a user input is acquired through a second region different from the first region of the touch sensor, the user input acquired through the second region may be an input by which one point of the second region is double tapped, and at least a portion of the second region may overlap the first region.

In an embodiment, the at least one processor may be configured to: reproduce a media content on the auxiliary display; acquire the user input, dragged from a first point of the touch sensor to a second point different from the first point, through the first region while the electronic device is in the first mode; and reproduce the media content with volume or brightness corresponding to the second point when the user input is released.

The electronic device according to an embodiment may further include a camera disposed on a surface opposite to the front display at the first part, wherein a second connection part of the at least one connection part is configured to connect, to each other, a second part and a third part among the multiple parts, the front display includes a first region overlapping the first part, a second region overlapping the second part, and a third region overlapping the third part, the first part and the second part are configured to be folded in a direction in which the first region and the second region face each other, the second part and the third part are configured to be folded in a direction in which the second region and the third region are opposite to each other, and the at least one processor is configured to display a preview image acquired by the camera in the third region of the front display, identify, based on a value acquired by the at least one sensor, a state in which the housing touches a user's body, determine an operation mode of the electronic device to be the first mode when identifying that at least a portion of a first side region of the first part and at least a portion of a second side region of the first part positioned at a side opposite to the first side region have touched the user's body, and perform zooming-in of the camera as the first function, based on a user input acquired through the first region of the touch sensor, while the electronic device is in the first mode.

In an embodiment, the at least one processor may be configured to determine the operation mode of the electronic device to be the second mode when identifying that at least a portion of the first side region touches the user's body and that the second side region does not touch the user's body, and perform zooming-in or zooming-out of the camera as the second function, based on a user input acquired through the first region of the touch sensor, while the electronic device is in the second mode.

In an embodiment, the at least one processor may be configured to zoom in the camera when acquiring a user input tapping through the first region while the electronic device operates in the first mode, zoom in the camera when acquiring a user input swiping in a first direction through the first region while the electronic device operates in the second mode, and zoom out the camera when acquiring a user input swiping in a second direction opposite to the first direction.

An electronic device according to various embodiments may include: a housing including a first part, a second part, and a connection part configured to connect the first part to the second part, the first part and the second part being rotatably coupled to the connection part, the first part including a first side region and a second side region formed at a side opposite to the first side region; a front display disposed in a space formed by the housing, and bendable according to an angle formed by the first part and the second part; an auxiliary display disposed on a surface opposite to the front display at the first part; at least one processor disposed in the space formed by the housing; a touch sensor disposed in the connection part or on the connection part and electrically connected to the at least one processor; and at least one sensor different from the touch sensor and disposed in the housing, wherein the at least one processor is configured to identify, based on a value acquired by the at least one sensor, whether at least one of at least a portion of the first side region and at least a portion of the second side region has touched a body of a user of the electronic device, identify, based on a value acquired by the at least one sensor, an angle formed by the first part and the second part, activate a first region of the touch sensor, activate the front display, and deactivate the auxiliary display, when at least a portion of the first side region and at least a portion of the second side region touch the user's body and when the angle formed by the first part and the second part is within a first designated angle range, and activate the first region of the touch sensor, deactivate the front display, and activate the auxiliary display, when at least a portion of the first side region and at least a portion of the second side region touch the user's body and when the angle formed by the first part and the second part is not within the first designated angle range.

In an embodiment, the at least one processor may be configured to activate a second region of the touch sensor, which is different from the first region, when at least a portion of the first side region or at least a portion of the second side region touches the user's body and when the angle formed by the first part and the second part is within a second designated angle range.

In an embodiment, the at least one processor may be configured to activate a third region of the touch sensor when at least a portion of the first side region and at least a portion of the second side region do not touch the user's body.

In an embodiment, the at least one processor may be further configured to identify, based on a value acquired by the at least one sensor, that the connection part faces a direction opposite to a gravity direction, and activate the third region of the touch sensor in response to identifying that the connection part faces the direction opposite to the gravity direction, the first region may include at least a portion of the second region, the third region may include at least a portion of the first region and at least a portion of the second region, the first designated angle range may be greater than 90° and less than 180°, and the second designated angle range may be 0° to 90°.

In the above-described detailed embodiments of the disclosure, an element included in the disclosure is expressed in the singular or the plural according to a presented detailed embodiment. However, the singular form or plural form is selected for convenience of description suitable for the presented situation, and the disclosure is not limited to a single element or multiple elements thereof. Furthermore, either multiple elements expressed in description may be configured into a single element or a single element in the description may be configured into multiple elements.

Meanwhile, while specific embodiments have been described in the detailed description of the disclosure, it goes without saying that various changes in form and details may be made without departing from the scope of the disclosure. Therefore, the scope of the disclosure should not be defined as being limited to the described embodiments, but should be defined by the appended claims.

## Claims

1. An electronic device (101) comprising:
a housing (300) comprising multiple parts and at least one connection part configured to connect the multiple parts;
a front display (260) disposed in a space formed by the housing (300), and bendable according to an angle formed by the multiple parts (301, 302);
a first connection (303) part among the at least one connection part configured to connect, to each other, a first part (301) and a second part (302) among the multiple parts of the housing (303);
a touch sensor (410) disposed in the first connection part (303) or on the first connection part (303);
at least one other sensor (420) different from the touch sensor (410) and disposed in the housing (300); and
at least one processor (120) electrically connected to the front display (260), the touch sensor (410), and the at least one other sensor (420),
wherein the at least one processor (120) is configured to:
determine, based on a value acquired by the at least one other sensor (420), an angle (305) formed by the first part (301) and the second part (302),
determine, when the first part (301) and the second part (302) form an acute angle, a current operation mode of the electronic device (101) among multiple supported operation modes,
perform, based on a user input acquired through a first region (412-1) of the touch sensor (410), a first function when the determined operation mode is a first mode,
perform, based on a user input acquired through the first region (412-1) of the touch sensor (410), a second function different from the first function when the determined operation mode is a second mode,
identify, based on a value acquired by the at least one other sensor (420), a state in which the housing (300) touches a user's body,
determine the operation mode of the electronic device (101) to be the first mode when identifying that at least a portion of a first side region (300-1) of the first part (300) and at least a portion of a second side region (300-2) of the first part (301) positioned at a side opposite to the first side region (300-1) of the first part (301) touches the user's body,
perform the first function, based on the user input acquired through the first region (412-1) of the touch sensor (410) while the electronic device (101) is in the first mode,
determine the operation mode of the electronic device (101) to be the second mode when identifying that at least a portion of a first side region (300-1) of the first part (301) touches a user's body and a second side region (300-2) of the first part (301) positioned at a side opposite to the first side region (300-1) of the first part (301) does not touch the user's body, and
perform the second function, based on the user input acquired through the first region (412-1) of the touch sensor (410) corresponding to the first side region (300-1) of the first part (301) while the electronic device (101) is in the second mode.

2. The electronic device (101) of claim 1, further comprising an auxiliary display (360) disposed on a surface of the first part (301) opposite to the front display (260).

3. The electronic device (101) of claim 2, further comprising a camera disposed on a surface of the second part (302) opposite to the front display (260),
wherein the at least one processor (120) is configured to:
display a preview image acquired by the camera on the auxiliary display (360), and
perform zooming-in of the camera as the first function, based on the user input acquired through the first region (412-1) of the touch sensor (410) while the electronic device (101) is in the first mode.

4. The electronic device (101) of claim 3, wherein the at least one processor (120) is configured to zoom out the camera, based on a user input acquired through a second region (412-2) of the touch sensor (410) different from the first region (412-1) of the touch sensor (410).

5. The electronic device (101) of claim 4, wherein the first region (412-1) of the touch sensor (410) corresponds to the first side region (300-1) of the second part (302), and the second region (412-2) of the touch sensor (410) corresponds to the second side region (300-2) of the second part (302).

6. The electronic device (101) of claim 2, further comprising a camera disposed on a surface of the second part (302) opposite to the front display (260),
wherein the at least one processor (120) is configured to:
display a preview image acquired by the camera on the auxiliary display (360), and
perform zooming-in or zooming-out of the camera as the second function, based on the user input acquired through the first region (412-1) of the touch sensor (410) corresponding to the first side region (300-1) of the first part (301) while the electronic device (101) is in the second mode.

7. The electronic device (101) of claim 6, wherein the at least one processor (120) is configured to:
zoom in the camera when the acquired user input is a swipe in a first direction through the first region (412-1) of the touch sensor (410), and
zoom out the camera when the acquired user input is a swipe in a second direction opposite to the first direction through the first region (412-1) of the touch sensor (410).

8. The electronic device (101) of claim 7, wherein the at least one processor (120) is configured to store an image acquired by the camera in a memory (130) of the electronic device (101) when a user input having a pressure exceeding a designated pressure is acquired in the first region (412-1) by the touch sensor (410).

9. The electronic device (101) of claim 2, wherein the at least one processor (120) is configured to:
display, when the determined operation mode is the first mode, a visual object indicating the first function in a region on a display region of the auxiliary display (360) corresponding to the first region (412-1) of the touch sensor (410), and
display, when the determined operation mode is the second mode, a visual object indicating the second function in a region on the display region of the auxiliary display (360) corresponding to the first region (412-1) of the touch sensor (410).

10. The electronic device (101) of claim 2, wherein the at least one processor (120) is configured to:
reproduce a media content on the auxiliary display (360); and
if the acquired user input is a drag from a first point of the touch sensor (410) to a second point different from the first point, through the first region (412-1) of the touch sensor (410) while the electronic device (101) is in the first mode, perform seeking of the reproduced media content as the first function, based on the acquired user input.

11. The electronic device (101) of claim 10, wherein the at least one processor (120) is configured to reproduce a media content following the reproduced media content when a user input is acquired through a second region (412-2) different from the first region (412-1) of the touch sensor (410) during the reproduced media content, wherein
the user input acquired through the second region (412-2) of the touch sensor (410) is an input by which one point of the second region (412-2) of the touch sensor (410) is tapped, and wherein
at least a portion of the second region (412-2) of the touch sensor (410) overlaps the first region (412-1) of the touch sensor (410).

12. The electronic device (101) of claim 10, wherein the at least one processor (120) is configured to fast-forward the reproduced media content when a user input is acquired through a second region (412-2) of the touch sensor (410) different from the first region (412-1) of the touch sensor (410) during the reproduced media content, wherein
the user input acquired through the second region (412-2) of the touch sensor (410) is an input by which one point of the second region (412-2) of the touch sensor (410) is double tapped, and wherein
at least a portion of the second region (412-2) of the touch sensor (410) overlaps the first region (412-1) of the touch sensor (410).

13. The electronic device (101) of claim 2, wherein the at least one processor (120) is configured to:
reproduce a media content on the auxiliary display (360); and
if the acquired the user input is a drag from a first point of the touch sensor (410) to a second point different from the first point, through the first region (412-1) of the touch sensor (410) while the electronic device (101) is in the first mode, reproduce the media content with volume or brightness corresponding to the second point when the user input is released.

14. The electronic device (101, 1501) of claim 1, further comprising a camera disposed on a surface of the first part (301, 1531) opposite to the front display (260, 1560),
wherein a second connection part (1535) of the at least one connection part is configured to connect, to each other, the second part (302, 1532) and a third part (1533) among the multiple parts of the housing (300),
the front display (260, 1560) comprises a first region (1561) overlapping the first part (301, 1531), a second region (1562) overlapping the second part (302, 1532), and a third region (1563) overlapping the third part (1533),
the first part (301, 1531) and the second part (320, 1532) are configured to be folded in a direction in which the first region (1561) of the front display (260, 1560) and the second region (1562) of the front display (260, 1560) face each other,
the second part (302, 1532) and the third part (1533) are configured to be folded in a direction in which the second region (1562) of the front display (260, 1560) and the third region (1563) of the front display (260, 1560) are opposite to each other, and
the at least one processor (120) is configured to:
display a preview image acquired by the camera in the third region (1563) of the front display (260, 1560),
identify, based on a value acquired by the at least one other sensor (420), a state in which the housing (300) touches a user's body,
determine an operation mode of the electronic device (101, 1501) to be the first mode when identifying that at least a portion of a first side region (1530-1) of the first part (301, 1531) and at least a portion of a second side region (1530-2) of the first part (301, 1531) positioned at a side opposite to the first side region (1530-1) of the first part (301, 1531) have touched the user's body, and
perform zooming-in of the camera as the first function, based on a user input acquired through the first region (412-1) of the touch sensor (410), while the electronic device (101, 1501) is in the first mode.

15. The electronic device (101, 1501) of claim 14, wherein the at least one processor (120) is configured to:
determine the operation mode of the electronic device (101, 1501) to be the second mode when identifying that at least a portion of the first side region (1530-1) of the first part (301, 5131) touches the user's body and that the second side region (1530-2) of the first part (301, 1531) does not touch the user's body, and
perform zooming-in or zooming-out of the camera as the second function, based on a user input acquired through the first region (412-1) of the touch sensor (410), while the electronic device (101, 1501) is in the second mode.

## Patentansprüche

1. Elektronische Vorrichtung (101), umfassend:
ein Gehäuse (300), das mehrere Teile und zumindest einen Verbindungsteil umfasst, der dazu konfiguriert ist, die mehreren Teile zu verbinden;
eine Frontanzeige (260), die in einem Raum angeordnet ist, der durch das Gehäuse (300) gebildet ist und gemäß einem Winkel, der durch die mehreren Teile (301, 302) gebildet ist, biegbar ist;
einen ersten Verbindungsteil (303) aus dem zumindest einen Verbindungsteil, der dazu konfiguriert ist, einen ersten Teil (301) und einen zweiten Teil (302) aus den mehreren Teilen des Gehäuses (303) miteinander zu verbinden;
einen Berührungssensor (410), der in dem ersten Verbindungsteil (303) oder an dem ersten Verbindungsteil (303) angeordnet ist;
zumindest einen anderen Sensor (420), der sich von dem Berührungssensor (410) unterscheidet und in dem Gehäuse (300) angeordnet ist; und
zumindest einen Prozessor (120), der elektrisch mit der Frontanzeige (260), dem Berührungssensor (410) und dem zumindest einen anderen Sensor (420) verbunden ist,
wobei der zumindest eine Prozessor (120) zu Folgendem konfiguriert ist:
Bestimmen, basierend auf einem Wert, der durch den zumindest einen anderen Sensor (420) erfasst wird, eines Winkels (305), der durch den ersten Teil (301) und den zweiten Teil (302) gebildet ist,
Bestimmen, wenn der erste Teil (301) und der zweite Teil (302) einen spitzen Winkel bilden, eines aktuellen Betriebsmodus der elektronischen Vorrichtung (101) aus mehreren unterstützten Betriebsmodi,
Durchführen, basierend auf einer Benutzereingabe, die durch eine erste Region (412-1) des Berührungssensors (410) erfasst wird, einer ersten Funktion, wenn der bestimmte Betriebsmodus ein erster Modus ist,
Durchführen, basierend auf einer Benutzereingabe, die durch die erste Region (412-1) des Berührungssensors (410) erfasst wird, einer zweiten Funktion, die sich von der ersten Funktion unterscheidet, wenn der bestimmte Betriebsmodus ein zweiter Modus ist,
Identifizieren, basierend auf einem Wert, der durch den zumindest einen anderen Sensor (420) erfasst wird, eines Zustands, in dem das Gehäuse (300) den Körper eines Benutzers berührt,
Bestimmen des Betriebsmodus der elektronischen Vorrichtung (101) als den ersten Modus, wenn identifiziert wird, dass zumindest ein Abschnitt einer ersten Seitenregion (300-1) des ersten Teils (300) und zumindest ein Abschnitt einer zweiten Seitenregion (300-2) des ersten Teils (301), der an einer Seite gegenüber der ersten Seitenregion (300-1) des ersten Teils (301) positioniert ist, den Körper des Benutzers berührt,
Durchführen der ersten Funktion, basierend auf der Benutzereingabe, die durch die erste Region (412-1) des Berührungssensors (410) erfasst wird, während die elektronische Vorrichtung (101) in dem ersten Modus ist,
Bestimmen des Betriebsmodus der elektronischen Vorrichtung (101) als den zweiten Modus, wenn identifiziert wird, dass zumindest ein Abschnitt einer ersten Seitenregion (300-1) des ersten Teils (301) den Körper eines Benutzers berührt und eine zweite Seitenregion (300-2) des ersten Teils (301), der an einer Seite gegenüber der ersten Seitenregion (300-1) des ersten Teils (301) positioniert ist, den Körper des Benutzers nicht berührt, und
Durchführen der zweiten Funktion, basierend auf der Benutzereingabe, die durch die erste Region (412-1) des Berührungssensors (410) erfasst wird, die der ersten Seitenregion (300-1) des ersten Teils (301) entspricht, während die elektronische Vorrichtung (101) in dem zweiten Modus ist.

2. Elektronische Vorrichtung (101) nach Anspruch 1, ferner umfassend eine Hilfsanzeige (360), die auf einer Oberfläche des ersten Teils (301) gegenüber der Frontanzeige (260) angeordnet ist.

3. Elektronische Vorrichtung (101) nach Anspruch 2, ferner umfassend eine Kamera, die auf einer Oberfläche des zweiten Teils (302) gegenüber der Frontanzeige (260) angeordnet ist,
wobei der zumindest eine Prozessor (120) zu Folgendem konfiguriert ist:
Anzeigen eines Vorschaubildes, das durch die Kamera erfasst wird, auf der Hilfsanzeige (360), und
Durchführen von Vergrößern der Kamera als die erste Funktion, basierend auf der Benutzereingabe, die durch die erste Region (412-1) des Berührungssensors (410) erfasst wird, während die elektronische Vorrichtung (101) in dem ersten Modus ist.

4. Elektronische Vorrichtung (101) nach Anspruch 3, wobei der zumindest eine Prozessor (120) dazu konfiguriert ist, die Kamera zu verkleinern, basierend auf einer Benutzereingabe, die durch eine zweite Region (412-2) des Berührungssensors (410) erfasst wird, die sich von der ersten Region (412-1) des Berührungssensors (410) unterscheidet.

5. Elektronische Vorrichtung (101) nach Anspruch 4, wobei die erste Region (412-1) des Berührungssensors (410) der ersten Seitenregion (300-1) des zweiten Teils (302) entspricht und die zweite Region (412-2) des Berührungssensors (410) der zweiten Seitenregion (300-2) des zweiten Teils (302) entspricht.

6. Elektronische Vorrichtung (101) nach Anspruch 2, ferner umfassend eine Kamera, die auf einer Oberfläche des zweiten Teils (302) gegenüber der Frontanzeige (260) angeordnet ist,
wobei der zumindest eine Prozessor (120) zu Folgendem konfiguriert ist:
Anzeigen eines Vorschaubildes, das durch die Kamera erfasst wird, auf der Hilfsanzeige (360), und
Durchführen von Vergrößern oder Verkleinern der Kamera als die zweite Funktion, basierend auf der Benutzereingabe, die durch die erste Region (412-1) des Berührungssensors (410) erfasst wird, die der ersten Seitenregion (300-1) des ersten Teils (301) entspricht, während die elektronische Vorrichtung (101) in dem zweiten Modus ist.

7. Elektronische Vorrichtung (101) nach Anspruch 6, wobei der zumindest eine Prozessor (120) zu Folgendem konfiguriert ist:
Vergrößern der Kamera, wenn die erfasste Benutzereingabe ein Wischen in einer ersten Richtung durch die erste Region (412-1) des Berührungssensors (410) ist, und
Verkleinern der Kamera, wenn die erfasste Benutzereingabe ein Wischen in einer zweiten Richtung entgegengesetzt zu der ersten Richtung durch die erste Region (412-1) des Berührungssensors (410) ist.

8. Elektronische Vorrichtung (101) nach Anspruch 7, wobei der zumindest eine Prozessor (120) dazu konfiguriert ist, ein Bild, das durch die Kamera erfasst wird, in einem Speicher (130) der elektronischen Vorrichtung (101) zu speichern, wenn eine Benutzereingabe mit einem Druck, der einen benannten Druck überschreitet, in der ersten Region (412-1) durch den Berührungssensor (410) erfasst wird.

9. Elektronische Vorrichtung (101) nach Anspruch 2, wobei der zumindest eine Prozessor (120) zu Folgendem konfiguriert ist:
Anzeigen, wenn der bestimmte Betriebsmodus der erste Modus ist, eines visuellen Objekts, das die erste Funktion in einer Region auf einer Anzeigeregion der Hilfsanzeige (360) angibt, die der ersten Region (412-1) des Berührungssensors (410) entspricht, und
Anzeigen, wenn der bestimmte Betriebsmodus der zweite Modus ist, eines visuellen Objekts, das die zweite Funktion in einer Region auf der Anzeigeregion der Hilfsanzeige (360) angibt, die der ersten Region (412-1) des Berührungssensors (410) entspricht.

10. Elektronische Vorrichtung (101) nach Anspruch 2, wobei der zumindest eine Prozessor (120) zu Folgendem konfiguriert ist:
Wiedergeben eines Medieninhalts auf der Hilfsanzeige (360); und
wenn die erfasste Benutzereingabe ein Ziehen von einem ersten Punkt des Berührungssensors (410) zu einem zweiten Punkt, der sich von dem ersten Punkt unterscheidet, durch die erste Region (412-1) des Berührungssensors (410) ist, während die elektronische Vorrichtung (101) in dem ersten Modus ist, Durchführen von Suchen des wiedergegebenen Medieninhalts als die erste Funktion, basierend auf der erfassten Benutzereingabe.

11. Elektronische Vorrichtung (101) nach Anspruch 10, wobei der zumindest eine Prozessor (120) dazu konfiguriert ist, einen Medieninhalt wiederzugeben, der dem wiedergegebenen Medieninhalt folgt, wenn eine Benutzereingabe durch eine zweite Region (412-2), die sich von der ersten Region (412-1) des Berührungssensors (410) unterscheidet, während des wiedergegebenen Medieninhalts erfasst wird, wobei
die Benutzereingabe, die durch die zweite Region (412-2) des Berührungssensors (410) erfasst wird, eine Eingabe ist, durch die ein Punkt der zweiten Region (412-2) des Berührungssensors (410) angetippt wird, und wobei
zumindest ein Abschnitt der zweiten Region (412-2) des Berührungssensors (410) die erste Region (412-1) des Berührungssensors (410) überlappt.

12. Elektronische Vorrichtung (101) nach Anspruch 10, wobei der zumindest eine Prozessor (120) dazu konfiguriert ist, den wiedergegebenen Medieninhalt vorzuspulen, wenn eine Benutzereingabe durch eine zweite Region (412-2) des Berührungssensors (410), die sich von der ersten Region (412-1) des Berührungssensors (410) unterscheidet, während des wiedergegebenen Medieninhalts erfasst wird, wobei
die Benutzereingabe, die durch die zweite Region (412-2) des Berührungssensors (410) erfasst wird, eine Eingabe ist, durch die ein Punkt der zweiten Region (412-2) des Berührungssensors (410) angetippt wird, und wobei
zumindest ein Abschnitt der zweiten Region (412-2) des Berührungssensors (410) die erste Region (412-1) des Berührungssensors (410) überlappt.

13. Elektronische Vorrichtung (101) nach Anspruch 2, wobei der zumindest eine Prozessor (120) zu Folgendem konfiguriert ist:
Wiedergeben eines Medieninhalts auf der Hilfsanzeige (360); und
wenn die erfasste Benutzereingabe ein Ziehen von einem ersten Punkt des Berührungssensors (410) zu einem zweiten Punkt, der sich von dem ersten Punkt unterscheidet, durch die erste Region (412-1) des Berührungssensors (410) ist, während die elektronische Vorrichtung (101) in dem ersten Modus ist, Wiedergeben des Medieninhalts mit Lautstärke oder Helligkeit, die dem zweiten Punkt entspricht, wenn die Benutzereingabe freigegeben wird.

14. Elektronische Vorrichtung (101, 1501) nach Anspruch 1, ferner umfassend eine Kamera, die auf einer Oberfläche des ersten Teils (301, 1531) gegenüber der Frontanzeige (260, 1560) angeordnet ist,
wobei ein zweiter Verbindungsteil (1535) des zumindest einen Verbindungsteils dazu konfiguriert ist, den zweiten Teil (302, 1532) und einen dritten Teil (1533) aus den mehreren Teilen des Gehäuses (300) miteinander zu verbinden,
die Frontanzeige (260, 1560) eine erste Region (1561), die den ersten Teil (301, 1531) überlappt, eine zweite Region (1562), die den zweiten Teil (302, 1532) überlappt, und eine dritte Region (1563), die den dritten Teil (1533) überlappt, umfasst,
der erste Teil (301, 1531) und der zweite Teil (320, 1532) dazu konfiguriert sind, in einer Richtung gefaltet zu werden, in der die erste Region (1561) der Frontanzeige (260, 1560) und die zweite Region (1562) der Frontanzeige (260, 1560) einander zugewandt sind,
der zweite Teil (302, 1532) und der dritte Teil (1533) dazu konfiguriert sind, in einer Richtung gefaltet zu werden, in der die zweite Region (1562) der Frontanzeige (260, 1560) und die dritte Region (1563) der Frontanzeige (260, 1560) einander gegenüberliegen, und
der zumindest eine Prozessor (120) zu Folgendem konfiguriert ist:
Anzeigen eines Vorschaubildes, das durch die Kamera erfasst wird, in der dritten Region (1563) der Frontanzeige (260, 1560),
Identifizieren, basierend auf einem Wert, der durch den zumindest einen anderen Sensor (420) erfasst wird, eines Zustands, in dem das Gehäuse (300) den Körper eines Benutzers berührt,
Bestimmen eines Betriebsmodus der elektronischen Vorrichtung (101, 1501) als den ersten Modus, wenn identifiziert wird, dass zumindest ein Abschnitt einer ersten Seitenregion (1530-1) des ersten Teils (301, 1531) und zumindest ein Abschnitt einer zweiten Seitenregion (1530-2) des ersten Teils (301, 1531), der an einer Seite gegenüber der ersten Seitenregion (1530-1) des ersten Teils (301, 1531) positioniert ist, den Körper des Benutzers berührt hat, und
Durchführen von Vergrößern der Kamera als die erste Funktion, basierend auf einer Benutzereingabe, die durch die erste Region (412-1) des Berührungssensors (410) erfasst wird, während die elektronische Vorrichtung (101, 1501) in dem ersten Modus ist.

15. Elektronische Vorrichtung (101, 1501) nach Anspruch 14, wobei der zumindest eine Prozessor (120) zu Folgendem konfiguriert ist:
Bestimmen des Betriebsmodus der elektronischen Vorrichtung (101, 1501) als den zweiten Modus, wenn identifiziert wird, dass zumindest ein Abschnitt der ersten Seitenregion (1530-1) des ersten Teils (301, 5131) den Körper des Benutzers berührt und dass die zweite Seitenregion (1530-2) des ersten Teils (301, 1531) den Körper des Benutzers nicht berührt, und
Durchführen von Vergrößern oder Verkleinern der Kamera als die zweite Funktion, basierend auf einer Benutzereingabe, die durch die erste Region (412-1) des Berührungssensors (410) erfasst wird, während die elektronische Vorrichtung (101, 1501) in dem zweiten Modus ist.

## Revendications

1. Dispositif électronique (101) comprenant :
un boîtier (300) comprenant de multiples parties et au moins une partie de raccordement configurée pour raccorder les multiples parties ;
un dispositif d'affichage avant (260) disposé dans un espace formé par le boîtier (300) et pouvant être plié selon un angle formé par les multiples parties (301, 302) ;
une première partie de raccordement (303) parmi l'au moins une partie de raccordement configurée pour raccorder, l'une à l'autre, une première partie (301) et une deuxième partie (302) parmi les multiples parties du boîtier (303) ;
un capteur tactile (410) disposé dans la première partie de raccordement (303) ou sur la première partie de raccordement (303) ;
au moins un autre capteur (420) différent du capteur tactile (410) et disposé dans le boîtier (300) ; et
au moins un processeur (120) raccordé électriquement au dispositif d'affichage avant (260), au capteur tactile (410) et à l'au moins un autre capteur (420),
ledit au moins un processeur (120) étant configuré pour :
déterminer, sur la base d'une valeur acquise par l'au moins un autre capteur (420), un angle (305) formé par la première partie (301) et la deuxième partie (302),
déterminer, lorsque la première partie (301) et la deuxième partie (302) forment un angle aigu, un mode de fonctionnement actuel du dispositif électronique (101) parmi de multiples modes de fonctionnement pris en charge,
réaliser, sur la base d'une entrée utilisateur acquise par l'intermédiaire d'une première zone (412-1) du capteur tactile (410), une première fonction lorsque le mode de fonctionnement déterminé est un premier mode,
réaliser, sur la base d'une entrée utilisateur acquise par l'intermédiaire de la première zone (412-1) du capteur tactile (410), une seconde fonction différente de la première fonction lorsque le mode de fonctionnement déterminé est un second mode,
identifier, sur la base d'une valeur acquise par l'au moins un autre capteur (420), un état dans lequel le boîtier (300) touche le corps d'un utilisateur,
déterminer le mode de fonctionnement du dispositif électronique (101) comme étant le premier mode lors de l'identification qu'au moins une portion d'une première zone latérale (300-1) de la première partie (300) et au moins une portion d'une seconde zone latérale (300-2) de la première partie (301) positionnée sur un côté opposé à la première zone latérale (300-1) de la première partie (301) touchent le corps de l'utilisateur,
réaliser la première fonction, sur la base de l'entrée utilisateur acquise par l'intermédiaire de la première zone (412-1) du capteur tactile (410) pendant que le dispositif électronique (101) est dans le premier mode,
déterminer le mode de fonctionnement du dispositif électronique (101) comme étant le second mode lors de l'identification qu'au moins une portion d'une première zone latérale (300-1) de la première partie (301) touche le corps d'un utilisateur et qu'une seconde zone latérale (300-2) de la première partie (301) positionnée sur un côté opposé à la première zone latérale (300-1) de la première partie (301) ne touche par le corps de l'utilisateur, et
réaliser la seconde fonction, sur la base de l'entrée utilisateur acquise par l'intermédiaire de la première zone (412-1) du capteur tactile (410) correspondant à la première zone latérale (300-1) de la première partie (301) pendant que le dispositif électronique (101) est dans le second mode.

2. Dispositif électronique (101) de la revendication 1, comprenant en outre un dispositif d'affichage auxiliaire (360) disposé sur une surface de la première partie (301) opposée au dispositif d'affichage avant (260).

3. Dispositif électronique (101) de la revendication 2, comprenant en outre une caméra disposée sur une surface de la deuxième partie (302) opposée au dispositif d'affichage avant (260), ledit au moins un processeur (120) étant configuré pour : afficher une image de prévisualisation acquise par la caméra sur le dispositif d'affichage auxiliaire (360), et
réaliser un zoom avant de la caméra en tant que première fonction, sur la base de l'entrée utilisateur acquise par l'intermédiaire de la première zone (412-1) du capteur tactile (410) pendant que le dispositif électronique (101) est dans le premier mode.

4. Dispositif électronique (101) de la revendication 3, ledit au moins un processeur (120) étant configuré pour réaliser un zoom arrière de la caméra, sur la base d'une entrée utilisateur acquise par l'intermédiaire d'une deuxième zone (412-2) du capteur tactile (410) différente de la première zone (412-1) du capteur tactile (410).

5. Dispositif électronique (101) de la revendication 4, ladite première zone (412-1) du capteur tactile (410) correspondant à la première zone latérale (300-1) de la deuxième partie (302), et ladite deuxième zone (412-2) du capteur tactile (410) correspondant à la seconde zone latérale (300-2) de la deuxième partie (302).

6. Dispositif électronique (101) de la revendication 2, comprenant en outre une caméra disposée sur une surface de la deuxième partie (302) opposée au dispositif d'affichage avant (260), ledit au moins un processeur (120) étant configuré pour :
afficher une image de prévisualisation acquise par la caméra sur le dispositif d'affichage auxiliaire (360), et
réaliser un zoom avant ou un zoom arrière de la caméra en tant que seconde fonction, sur la base de l'entrée utilisateur acquise par l'intermédiaire de la première zone (412-1) du capteur tactile (410) correspondant à la première zone latérale (300-1) de la première partie (301) pendant que le dispositif électronique (101) est dans le second mode.

7. Dispositif électronique (101) de la revendication 6, ledit au moins un processeur (120) étant configuré pour :
réaliser un zoom avant de la caméra lorsque l'entrée utilisateur acquise est un balayage dans une première direction à travers la première zone (412-1) du capteur tactile (410), et
réaliser un zoom arrière de la caméra lorsque l'entrée utilisateur acquise est un balayage dans une seconde direction opposée à la première direction à travers la première zone (412-1) du capteur tactile (410).

8. Dispositif électronique (101) de la revendication 7, ledit au moins un processeur (120) étant configuré pour stocker une image acquise par la caméra dans une mémoire (130) du dispositif électronique (101) lorsqu'une entrée utilisateur possédant une pression dépassant une pression désignée est acquise dans la première zone (412-1) par le capteur tactile (410).

9. Dispositif électronique (101) de la revendication 2, ledit au moins un processeur (120) étant configuré pour :
afficher, lorsque le mode de fonctionnement déterminé est le premier mode, un objet visuel indiquant la première fonction dans une zone sur une zone d'affichage du dispositif d'affichage auxiliaire (360) correspondant à la première zone (412-1) du capteur tactile (410), et
afficher, lorsque le mode de fonctionnement déterminé est le second mode, un objet visuel indiquant la seconde fonction dans une zone sur la zone d'affichage du dispositif d'affichage auxiliaire (360) correspondant à la première zone (412-1) du capteur tactile (410).

10. Dispositif électronique (101) de la revendication 2, ledit au moins un processeur (120) étant configuré pour :
reproduire un contenu multimédia sur le dispositif d'affichage auxiliaire (360) ; et
si l'entrée utilisateur acquise est un glissement à partir d'un premier point du capteur tactile (410) jusqu'à un second point différent du premier point, à travers la première zone (412-1) du capteur tactile (410) pendant que le dispositif électronique (101) est dans le premier mode, réaliser une recherche du contenu multimédia reproduit en tant que première fonction, sur la base de l'entrée utilisateur acquise.

11. Dispositif électronique (101) de la revendication 10, ledit au moins un processeur (120) étant configuré pour reproduire un contenu multimédia suivant le contenu multimédia reproduit lorsqu'une entrée utilisateur est acquise par l'intermédiaire d'une deuxième zone (412-2) différente de la première zone (412-1) du capteur tactile (410) durant le contenu multimédia reproduit,
ladite entrée utilisateur acquise par l'intermédiaire de la deuxième zone (412-2) du capteur tactile (410) étant une entrée par laquelle un point de la deuxième zone (412-2) du capteur tactile (410) est tapoté, et
au moins une portion de la deuxième zone (412-2) du capteur tactile (410) chevauchant la première zone (412-1) du capteur tactile (410).

12. Dispositif électronique (101) de la revendication 10, ledit au moins un processeur (120) étant configuré pour faire avancer rapidement le contenu multimédia reproduit lorsqu'une entrée utilisateur est acquise par l'intermédiaire d'une deuxième zone (412-2) du capteur tactile (410) différente de la première zone (412-1) du capteur tactile (410) durant le contenu multimédia reproduit,
ladite entrée utilisateur acquise par l'intermédiaire de la deuxième zone (412-2) du capteur tactile (410) étant une entrée par laquelle un point de la deuxième zone (412-2) du capteur tactile (410) est doublement tapoté, et
au moins une portion de la deuxième zone (412-2) du capteur tactile (410) chevauchant la première zone (412-1) du capteur tactile (410).

13. Dispositif électronique (101) de la revendication 2, ledit au moins un processeur (120) étant configuré pour :
reproduire un contenu multimédia sur le dispositif d'affichage auxiliaire (360) ; et
si l'entrée utilisateur acquise est un glissement à partir d'un premier point du capteur tactile (410) jusqu'à un second point différent du premier point, à travers la première zone (412-1) du capteur tactile (410) pendant que le dispositif électronique (101) est dans le premier mode, reproduire le contenu multimédia avec un volume ou une luminosité correspondant au second point lorsque l'entrée utilisateur est libérée.

14. Dispositif électronique (101, 1501) de la revendication 1, comprenant en outre une caméra disposée sur une surface de la première partie (301, 1531) opposée au dispositif d'affichage avant (260, 1560),
une deuxième partie de raccordement (1535) de l'au moins une partie de raccordement étant configurée pour raccorder, l'une à l'autre, la deuxième partie (302, 1532) et une troisième partie (1533) parmi les multiples parties du boîtier (300),
ledit dispositif d'affichage avant (260, 1560) comprenant une première zone (1561) chevauchant la première partie (301, 1531), une deuxième zone (1562) chevauchant la deuxième partie (302, 1532), et une troisième zone (1563) chevauchant la troisième partie (1533),
ladite première partie (301, 1531) et ladite deuxième partie (320, 1532) étant configurées pour être pliées dans une direction dans laquelle la première zone (1561) du dispositif d'affichage avant (260, 1560) et la deuxième zone (1562) du dispositif d'affichage avant (260, 1560) se font face,
ladite deuxième partie (302, 1532) et ladite troisième partie (1533) étant configurées pour être pliées dans une direction dans laquelle la deuxième zone (1562) du dispositif d'affichage avant (260, 1560) et la troisième zone (1563) du dispositif d'affichage avant (260, 1560) sont opposées l'une à l'autre, et
ledit au moins un processeur (120) étant configuré pour :
afficher une image de prévisualisation acquise par la caméra dans la troisième zone (1563) du dispositif d'affichage avant (260, 1560),
identifier, sur la base d'une valeur acquise par l'au moins un autre capteur (420), un état dans lequel le boîtier (300) touche le corps d'un utilisateur,
déterminer un mode de fonctionnement du dispositif électronique (101, 1501) comme étant le premier mode lors de l'identification qu'au moins une portion d'une première zone latérale (1530-1) de la première partie (301, 1531) et au moins une portion d'une seconde zone latérale (1530-2) de la première partie (301, 1531) positionnée sur un côté opposé à la première zone latérale (1530-1) de la première partie (301, 1531) ont touché le corps de l'utilisateur, et
réaliser un zoom avant de la caméra en tant que première fonction, sur la base de l'entrée utilisateur acquise par l'intermédiaire de la première zone (412-1) du capteur tactile (410) pendant que le dispositif électronique (101, 1501) est dans le premier mode.

15. Dispositif électronique (101, 1501) de la revendication 14, ledit au moins un processeur (120) étant configuré pour :
déterminer le mode de fonctionnement du dispositif électronique (101, 1501) comme étant le second mode lors de l'identification qu'au moins une portion de la première zone latérale (1530-1) de la première partie (301, 5131) touche le corps de l'utilisateur et que la seconde zone latérale (1530-2) de la première partie (301, 1531) ne touche pas le corps de l'utilisateur, et
réaliser un zoom avant ou un zoom arrière de la caméra en tant que seconde fonction, sur la base de l'entrée utilisateur acquise par l'intermédiaire de la première zone (412-1) du capteur tactile (410) pendant que le dispositif électronique (101, 1501) est dans le second mode.
